# EUROPEAN PATENT APPLICATION

(11) **EP 1 759 745 A1**
(43) Date of publication of application: **07.03.2007**
(21) Application number: 06008202.1
(22) Date of filing: 20.04.2006
(51) Int. Cl.: A63F 13/04, A63F 13/06, A63F 13/10

(54) **Videogame system and storage medium having videogame program stored thereon**

(30) Priority: 30.08.2005 JP 2005249265
(71) Applicant: NINTENDO CO., LTD., Kyoto 601-8501 (JP)
(72) Inventor: Ikeda, Akio, Kamitoba Minami-ku Kyoto 601-8501 (JP); Ohta, Keizo, Kamitoba Minami-ku Kyoto 601-8501 (JP); Akasaka, Hideya, Kamitoba Minami-ku Kyoto 601-8501 (JP); Takahashi, Yuki, Kamitoba Minami-ku Kyoto 601-8501 (JP)
(74) Representative: Altenburg, Udo

(57) **Abstract**

A first controller includes a first operation data generation section for generating first operation data in accordance with a motion of a first controller body included in the first controller. A second controller includes a second operation data generation section for generating second operation data in accordance with a direction input operation performed by a player. A game apparatus includes a game process means for obtaining the first operation data and the second operation data and subjecting a virtual game world to a predetermined game process in accordance with the obtained operation data, and a display process means for causing the display device to display, on a display area, an image of the virtual game world having been subjected to the game process.

## Description

### CROSS REFERENCE OF RELATED APPLICATION

The disclosure of Japanese Patent Application No. 2005-249265 is incorporated herein by reference.

### BACKGROUND OF THE INVENTION

### Field of the Invention

The present invention relates to a game system and a storage medium having a game program stored thereon, and more particularly to a game system controlled using two controllers and a storage medium having a game program stored thereon.

### Description of the Background Art

For example, Japanese Laid-Open Patent Publication No. 2004-313492 (hereinafter, referred to as Patent Document 1) discloses a controller having its control units held by both hands of a player, respectively, so as to play a game.

The controller disclosed in Patent Document 1 is composed of an R unit to be held by a right hand of a player and an L unit to be held by a left hand of the player. The R unit and the L unit each has an operation button and a stick on the top surface and the side of a housing thereof. The R unit and the L unit can be physically coupled to each other so as to be used as a combined controller.

However, the controller disclosed in Patent Document 1 is constructed by simply separating a conventional game apparatus controller into right and left units. That is, although a player can place his or her right and left hands anywhere when the player holds the R and L units by his or her right and left hands, respectively, the player cannot control the controller itself with improved flexibility. For example, not only the combined controller but also the game apparatus controller separated into the right and the left units cannot realize a new operation.

Further, in a shooting game played using the controller, a stick is often used to move a shooting target. In this case, a direction in which the stick is to be inclined on the controller is different, in an actual space, from a direction in which the shooting target is to move on a screen, thereby making it difficult to intuitively recognize an operation direction. Accordingly, each player differently recognizes the correspondence between the direction in which the stick is to be inclined and the direction in which the shooting target is to move on the screen. Therefore, a "reverse" mode has to be provided so as to enable each player to set his or her desired direction. Moreover, the respective directions in which two sticks of the combined controller can be moved are coplanar on the controller. Therefore, when a character allowed to move in a depth direction of a virtual game space and a target which moves on a plane in a display area are to be separately controlled, the combined controller is not suitable in that a user cannot easily recognize the directions. Furthermore, since the R unit and the L unit are invariably assigned to a right hand and a left hand, respectively, it is difficult to set an operation based on each player's dominant hand.

Further, in a role playing game and the like, a menu selection is sometimes required during the game. At this time, in the game played using the controller, a selection item changes over one by one by making an input using a direction key and the like, whereby it takes long to perform the menu selection. Therefore, when the game is played in real time, a player cannot control a player character while selecting a selection item from a menu, thereby sometimes failing in the game. Moreover, in order to change the facing direction of the character, an operation section such as a stick must be kept inclined, thereby preventing the facing direction of the character from being quickly changed.

### SUMMARY OF THE INVENTION

Therefore, an object of the present invention is to provide a game system which can realize a new operation having enhanced flexibility by using a plurality of controllers, and a storage medium having a game program stored thereon.

The present invention has the following features to attain the object mentioned above. The reference numerals, step numbers and the like in the parentheses indicate the correspondence with the embodiment described below in order to aid in understanding the present invention and are not intended to limit, in any way, the scope of the present invention.

A first aspect of the present invention is directed to a game system (1) comprising a first controller (70), a second controller (76) and a game apparatus (3). The game apparatus executes a predetermined game program to cause a display device (2) to display, on a display area, one of a two-dimensional virtual game world and a three-dimensional virtual game world. The first controller includes a first operation data generation section (74, 701). The first operation data generation section generates first operation data (Da1, Da2, Da5) in accordance with a motion of a first controller body included in the first controller. The second controller includes a second operation data generation section (78). The second operation data generation section generates second operation data (Da3) in accordance with a direction input operation performed by a player. The game apparatus includes a game process means (S52 to S56) and a display process means (S57) . The game process means obtains the first operation data and the second operation data and subjects the virtual game world to a predetermined game process in accordance with the obtained operation data. The display process means causes the display device to display, on the display area, an image of the virtual game world having been subjected to the game process.

In a second aspect based on the first aspect, the game process means includes a designated coordinate determination means (S53). The designated coordinate determination meansdetermines, based on the first operation data, predetermined coordinates represented in the display area of the display device as designated coordinates (Dc3). The game process means performs the game process by performing a predetermined calculation using the designated coordinates and the second operation data.

In a third aspect based on the second aspect, the first controller includes an image pickup section (74). The image pickup section is fixed to the first controller body and is operable to take an image of a periphery along a predetermined direction from the first controller body. The first operation data includes one selected from the group consisting of an image taken by the image pickup section and a result (Da1, Da2) of subjecting the image taken by the image pickup section to a predetermined calculation. The designated coordinate determination means changes a position of designated coordinates from a predetermined position in accordance with a movement of a position of a predetermined imaging target (8) in the taken image, thereby determining the designated coordinates.

In a fourth aspect based on the second aspect, the first controller includes an acceleration sensor (701). The first operation data includes acceleration data (Da5) outputted by the acceleration sensor. The designated coordinate determination means changes a position of designated coordinates from a predetermined position in accordance with the acceleration data, thereby determining the designated coordinates.

In a fifth aspect based on the second aspect, the game process means calculates, in a three-dimensional virtual game space (S), three-dimensional designated coordinates corresponding to the designated coordinates and performs the game process including a calculation using the three-dimensional designated coordinates. The display process means displays, on the display area of the display device, the three-dimensional virtual game space obtained by the game process performed by the game process means.

In a sixth aspect based on the fifth aspect, the game process means changes at least one selected from the group consisting of position coordinates of a player character (P) in the virtual game world, position coordinates of a virtual camera (C), and a direction vector of the virtual camera, in accordance with the second operation data.

In a seventh aspect based on the fifth aspect, the game process means subjects an object (E) positioned at the three-dimensional designated coordinates to a predetermined process.

In an eighth aspect based on the second aspect, the game process means disposes a predetermined object (T) at a position corresponding to the designated coordinates.

In a ninth aspect based on the seventh aspect, the game process means changes at least one selected from the group consisting of position coordinates of a player character in the virtual game world, position coordinates of a virtual camera, and a direction vector of the virtual camera, in accordance with the second operation data.

In a tenth aspect based on the second aspect, the game process means generates the virtual game world including at least a menu area for allowing a player to select from a plurality of selection items (M1 to M7). The game process means performs a process for selecting the selection item displayed at a position (Cs) including the designated coordinates in the display area.

In an eleventh aspect based on the tenth aspect, the game process means changes at least one selected from the group consisting of position coordinates of a player character in the virtual game world, position coordinates of a virtual camera, and a direction vector of the virtual camera, in accordance with the second operation data.

In a twelfth aspect based on the fifth aspect, the game process means changes a direction of a virtual camera such that a sight point of the virtual camera coincides with the three-dimensional designated coordinates.

In a thirteenth aspect based on the twelfth aspect, the game process means changes at least one selected from the group consisting of position coordinates of a player character in the virtual game world and position coordinates of the virtual camera, in accordance with the second operation data.

In a fourteenth aspect based on the first aspect, the game process means subjects, to a predetermined calculation, an amount by which the first operation data varies in accordance with the motion of the first controller, determines a predetermined motion vector in a coordinate system of the display area, and changes a direction of a virtual camera such that a sight point of the virtual camera in a three-dimensional virtual game space moves on the display area in accordance with the motion vector. The display process means displays, on the display area of the display device, the three-dimensional virtual game space obtained by the game process performed by the game process means.

In a fifteenth aspect based on the fourteenth aspect, the game process means changes at least one selected from the group consisting of position coordinates of a player character in the virtual game world and position coordinates of the virtual camera, in accordance with the second operation data.

A sixteenth aspect of the present invention is directed to a storage medium having stored thereon a game program executable by a computer (30) of a game apparatus. The game apparatus obtains first operation data in accordance with a motion of a first controller body included in the first controller and second operation data based on a direction input operation supplied to a second controller. The game program causes the computer to execute a game process step (S52 to S56) and a display process step (S57). The game process step obtains the first operation data and the second operation data and subjects one of a two-dimensional virtual game world and a three-dimensional virtual game world to a predetermined game process in accordance with the obtainedoperationdata. The display process step causes a display device to display, on a display area, an image of the virtual game world having been subjected to the game process executed by the computer.

In a seventeenth aspect based on the sixteenth aspect, the game process step includes a designated coordinate determination step (S53). The designated coordinate determination step determines, based on the first operation data, predetermined coordinates represented in the display area of the display device as designated coordinates. The game process step includes a step of performing the game process by performing a predetermined calculation using the designated coordinates and the second operation data.

In an eighteenth aspect based on the seventeenth aspect, the first operation data includes one selected from the group consisting of an image and a result of subjecting the image to a predetermined calculation. The designated coordinate determination step includes a step of determining a movement of a position of a predetermined subject in the image, and a step of determining new designated coordinates by changing a position of the designated coordinates from a predetermined position in accordance with the determined movement.

In a nineteenth aspect based on the seventeenth aspect, the first operation data includes acceleration data outputted by the acceleration sensor of the first controller. The designated coordinate determination step includes a step of determining new designated coordinates by changing a position of the designated coordinates from a predetermined position in accordance with the acceleration data.

In a twentieth aspect based on the seventeenth aspect, the game process step includes a step of calculating, in a three-dimensional virtual game space, three-dimensional designated coordinates corresponding to the designated coordinates, and a step of performing the game process including a calculation using the three-dimensional designated coordinates. The display process step includes a step of displaying, on the display area of the display device, the three-dimensional virtual game space obtained by the game process performed by the game process step.

In a twenty-first aspect based on the twentieth aspect, the game process step includes a step of changing at least one selected from the group consisting of position coordinates of a player character in the virtual game world, position coordinates of a virtual camera, and a direction vector of the virtual camera, in accordance with the second operation data.

In a twenty-second aspect based on the twentieth aspect, the game process step includes a step of determining an object positioned at the three-dimensional designated coordinates, and a step of subjecting the object to a predetermined process.

In a twenty-third aspect based on the seventeenth aspect, the game process step includes a step of disposing a predetermined object at a position corresponding to the designated coordinates.

In a twenty-fourth aspect based on the twenty-third aspect, the game process step includes a step of changing at least one selected from the group consisting of position coordinates of a player character in the virtual game world, position coordinates of a virtual camera, and a direction vector of the virtual camera, in accordance with the second operation data.

In a twenty-fifth aspect based on the seventeenth aspect, the game process step includes a step of generating the virtual game world including at least a menu area for allowing a player to select from a plurality of selection items, and a step of performing a process for selecting the selection item displayed at a position including the designated coordinates in the display area.

In a twenty-sixth aspect based on the twenty-fifth aspect, the game process step includes a step of changing at least one selected from the group consisting of position coordinates of a player character in the virtual game world, position coordinates of a virtual camera, and a direction vector of the virtual camera, in accordance with the second operation data.

In a twenty-seventh aspect based on the twentieth aspect, the game process step includes a step of changing a direction of a virtual camera such that a sight point of the virtual camera coincides with the three-dimensional designated coordinates.

In a twenty-eighth aspect based on the twenty-seventh aspect, the game process step includes a step of changing at least one selected from the group consisting of position coordinates of a player character in the virtual game world and position coordinates of a virtual camera, in accordance with the second operation data.

In a twenty-ninth aspect based on the sixteenth aspect, the game process step include: a step of subjecting, to a predetermined calculation, an amount by which the first operation data varies in accordance with the motion of the first controller; a step of determining a predetermined motion vector in a coordinate system of the display area; and a step of changing a direction of a virtual camera such that a sight point of the virtual camera in a three-dimensional virtual game space moves on the display area in accordance with the motion vector. The display process step includes a step of displaying, on the display area of the display device, the three-dimensional virtual game space obtained by the game process performed by the game process step.

In a thirtieth aspect based on the twenty-ninth aspect, the game process step includes a step of changing at least one selected from the group consisting of position coordinates of a player character in the virtual game world and position coordinates of the virtual camera, in accordance with the second operation data.

According to the first aspect, the first controller generates operation data in accordance with a motion of a controller body included in the first controller, and the second controller generates operation data in accordance with a direction input operation. Thereby, when these game controllers are used in a game, a player can make an input with a finger of one hand as in the case of a conventional controller while moving the other hand. That is, the player can cause his or her right and left hands to perform respective separate operations, thereby providing a new operation, which cannot be conventionally performed.

According to the second aspect, designated coordinates are represented on a display area of a display device in accordance with a signal based on a motion of the controller body, whereby an operation input immediately applied to the display screen can be performed and an input having higher flexibility is enabled.

According to the third aspect, an image taken by the image pickup section secured to the first controller or information obtained from the taken image can be used as operation data. For example, a direction and a position of the first controller with respect to the imaging target can be detected, whereby a game operation can be performed in accordance with the direction and the position of the controller.

According to the fourth aspect, an acceleration sensor is used, thereby reducing a cost for the first operation data generation section.

According to the fifth aspect, in a game having a three-dimensional virtual game space displayed, designated coordinates can be set in the virtual game space in accordance with a signal based on a motion of the controller body.

According to the seventh aspect, a game process for influencing an object positioned at the designated coordinates obtained from the signal based on a motion of the controller body can be realized (for example, shooting an object positioned at the designated coordinates).

According to the eighth aspect, a game process for disposing an object (for example, a target cursor) at a position of the designated coordinates obtained from the signal based on a motion of the controller body can be realized.

According to the tenth aspect, a player can directly select an item with one hand, thereby reducing time loss and providing an operation having higher flexibility.

According to the sixth, the ninth, and the eleventh aspects, while an operation input immediately applied to a display screen in accordance with a motion of the controller body is performed with one hand, a direction input operation is performed with the other hand, thereby enabling an operation having wide variations. For example, a player can respectively perform a direction instruction operation and an operation of designating a position in the game space using different controllers, and therefore one operation will not influence the other and two direction instruction operations can be stably performed. Further, a player can use the two controllers based on his or her dominant hand. Moreover, for example, while a player uses one controller for instructing a player character and the like to move, the player can observe a position to be designated with the other controller. Furthermore, for example, while a player controls a character or the like with one hand, the player can directly select an item with the other hand, thereby reducing time loss and providing an operation having higher flexibility.

According to the twelfth and the fourteenth aspects, a sight point is moved in accordance with an operation input based on a motion of the controller body, whereby a quick direction change is enabled as necessary, the input can be intuitively performed, and a "reverse" mode is eliminated.

According to the thirteenth and the fifteenth aspect, while a player can instruct a player character, a virtual camera or the like to move using one controller, the player can observe a position to be designated with the other controller.

According to the present invention, the storage medium having the game program stored thereon can realize the same effect as the aforementioned game system by executing the game program stored on the storage medium by the computer of the game apparatus.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is an external view illustrating a game system 1 according to an embodiment of the present invention;
FIG. 2 is a functional block diagram of a game apparatus 3 shown in FIG. 1;
FIG. 3 is a perspective view illustrating an outer appearance of a controller 7 shown in FIG. 1;
FIG. 4 is a perspective view illustrating a state of a connecting cable 79 of the controller 7 shown in FIG. 3 being connected to or disconnected from a core unit 70;
FIG. 5 is a perspective view of the core unit 70 shown in FIG. 3 as seen from the top rear side thereof;
FIG. 6 is a perspective view of the core unit 70 shown in FIG. 3 as seen from the bottom rear side thereof;
FIG. 7A is a perspective view illustrating a state where an upper casing of the core unit 70 shown in FIG. 3 is removed;
FIG. 7B is a perspective view illustrating a state where a lower casing of the core unit 70 shown in FIG. 3 is removed;
FIG. 8A is a top view of a subunit 76 shown in FIG. 3;
FIG. 8B is a bottom view of the subunit 76 shown in FIG. 3;
FIG. 8C is a left side view of the subunit 76 shown in FIG. 3;
FIG. 9 is a perspective view of the subunit 76 shown in FIG. 3 as seen from the top front side thereof;
FIG. 10 is a top view illustrating an example of a first modification of the subunit 76 shown in FIG. 3;
FIG. 11 is a top view illustrating an example of a second modification of the subunit 76 shown in FIG. 3;
FIG. 12 is a top view illustrating an example of a third modification of the subunit 76 shown in FIG. 3;
FIG. 13 is a top view illustrating an example of a fourth modification of the subunit 76 shown in FIG. 3;
FIG. 14 is a block diagram illustrating a structure of the controller 7 shown in FIG. 3;
FIG. 15 is a diagram illustrating a state of a game being generally controlled with the controller 7 shown in FIG. 3;
FIG. 16 shows an exemplary state of a player holding the core unit 70 with a right hand as seen from the front side of the core unit 70;
FIG. 17 shows an exemplary state of a player holding the core unit 70 with a right hand as seen from the left side of the core unit 70;
FIG. 18 is a diagram illustrating a viewing angle of a LED module 8L, a viewing angle of a LED module 8R, and a viewing angle of an imaging information calculation section 74;
FIG. 19 shows an exemplary state of a player holding the subunit 76 with a left hand as seen from the right side of the subunit 76;
FIG. 20 is a diagram illustrating main data stored in a main memory 33 of the game apparatus 3;
FIG. 21 is a flow chart illustrating a flow of a game process performed by the game apparatus 3;
FIG. 22 is a diagram illustrating an exemplary game image displayed on a monitor 2 when the game apparatus 3 executes a shooting game as a first example;
FIG. 23 is a diagram illustrating a state of a virtual camera C used when the game apparatus 3 generates a game image as a second example; and
FIG. 24 is a diagram illustrating an exemplary game image displayed on the monitor 2 when the game apparatus 3 executes a role playing game as a third example.

### DESCRIPTION OF THE PREFERRED EMBODIMENTS

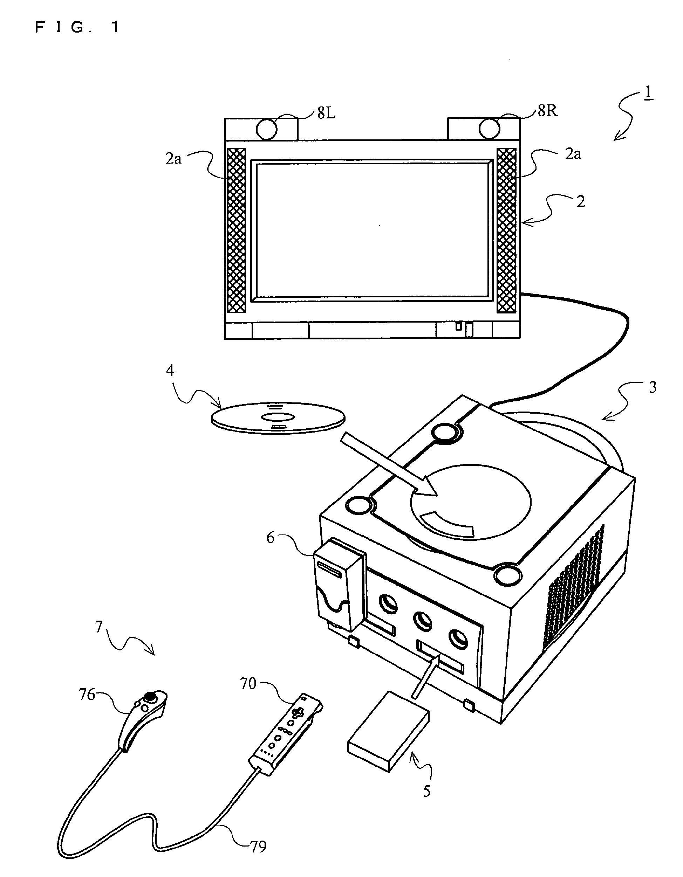

With reference to FIG. 1, a game system 1 according to one embodiment of the present invention will be described. FIG. 1 is an external view illustrating the game system 1. In the following description, the game system 1 according to the present invention includes a stationary game apparatus.

As shown in FIG. 1, the game system 1 includes an installation type game apparatus (hereinafter, referred to simply as a "game apparatus") 3, which is connected to a display (hereinafter, referred to as a "monitor") 2 of a home-use television receiver or the like having a speaker 2a via a connection cord, and a controller 7 for giving operation information to the game apparatus 3. The game apparatus 3 is connected to a receiving unit 6 via a connection terminal. The receiving unit 6 receives transmission data which is wirelessly transmitted from the controller 7. The controller 7 and the game apparatus 3 are connected to each other by wireless communication. On the game apparatus 3, an optical disc 4 as an example of an exchangeable information storage medium is detachably mounted. The game apparatus 3 includes a power ON/OFF switch, a game process reset switch, and an OPEN switch for opening a top lid of the game apparatus 3 on a top main surface of the game apparatus 3. When a player presses the OPEN switch, the lid is opened, so that the optical disc 4 can be mounted or dismounted.

Further, on the game apparatus 3, an external memory card 5 is detachably mounted when necessary. The external memory card 5 has a backup memory or the like mounted thereon for fixedly storing saved data or the like. The game apparatus 3 executes a game program or the like stored on the optical disc 4 and displays the result on the monitor 2 as a game image. The game apparatus 3 can also reproduce a state of a game played in the past using saved data stored in the external memory card 5 and display the game image on the monitor 2. A player playing with the game apparatus 3 can enjoy the game by operating the controller 7 while watching the game image displayed on the monitor 2.

The controller 7 wirelessly transmits the transmission data from a communication section 75 included therein (described later) to the game apparatus 3 connected to the receiving unit 6, using the technology of, for example, Bluetooth (registered trademark). The controller 7 has two control units, a core unit 70 and a subunit 76, connected to each other by a flexible connecting cable 79. The controller 7 is an operation means for mainly operating a player object appearing in a game space displayed on the monitor 2. The core unit 70 and the subunit 76 each includes an operation section such as a plurality of operation buttons, a key, a stick and the like. As described later in detail, the core unit 70 includes an imaging information calculation section 74 for taking an image viewed from the core unit 70. As an example of an imaging target of the imaging information calculation section 74, two LED modules 8L and 8R are provided in the vicinity of a display screen of the monitor 2. The LED modules 8L and 8R each outputs infrared light forward from the monitor 2. Although in the present embodiment the core unit 70 and the subunit 76 are connected to each other by the flexible cable, the subunit 76 may have a wireless unit, thereby eliminating the connecting cable 79. For example, the subunit 76 has a Bluetooth (registered trademark) unit as the wireless unit, whereby the subunit 76 can transmit operation data to the core unit 70.

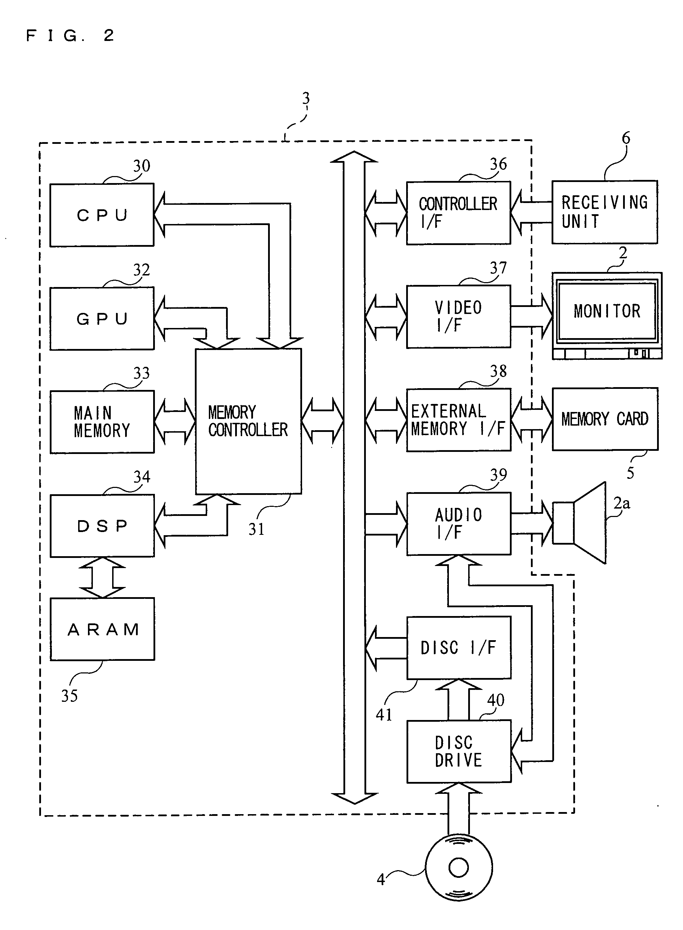

Next, with reference to FIG. 2, a structure of the game apparatus 3 will be described. FIG. 2 is a functional block diagram of the game apparatus 3.

As shown in FIG. 2, the game apparatus 3 includes, for example, a RISC CPU (central processing unit) 30 for executing various types of programs. The CPU 30 executes a boot program stored in a boot ROM (not shown) to, for example, initializememories including a main memory 33, and then executes a game program stored on the optical disc 4 to perform game process or the like in accordance with the game program. The CPU 30 is connected to a GPU (Graphics Processing Unit) 32, the main memory 33, a DSP (Digital Signal Processor) 34, and an ARAM (audio RAM) 35 via a memory controller 31. The memory controller 31 is connected to a controller I/F (interface) 36, a video I/F 37, an external memory I/F 38, an audio I/F 39, and a disc I/F 41 via a predetermined bus. The controller I/F 36, the video I/F 37, the external memory I/F 38, the audio I/F 39 and the disc I/F 41 are respectively connected to the receiving unit 6, the monitor 2, the external memory card 5, the speaker 2a, and a disc drive 40.

The GPU 32 performs image processing based on an instruction from the CPU 30. The GPU 32 includes, for example, a semiconductor chip for performing calculation process necessary for displaying 3D graphics. The GPU 32 performs the image process using a memory dedicated for image process (not shown) and a part of the storage area of the main memory 33. The GPU 32 generates game image data and a movie to be displayed on the monitor 2 using suchmemories, and outputs the generated data ormovie to the monitor 2 via the memory controller 31 and the video I/F 37 as necessary.

The main memory 33 is a storage area used by the CPU 30, and stores a game program or the like necessary for processing performed by the CPU 30 as necessary. For example, the main memory 33 stores a game program read from the optical disc 4 by the CPU 30, various types of data and the like. The game program, the various types of data or the like stored in the main memory 33 are executed by the CPU 30.

The DSP 34 processes sound data or the like generated by the CPU 30 during the execution of the game program. The DSP 34 is connected to the ARAM 35 for storing the sound data or the like. The ARAM 35 is used when the DSP 34 performs a predetermined process (for example, storage of the game program or sound data already read). The DSP 34 reads the sound data stored in the ARAM 35, and outputs the sound data to the speaker 2a included in the monitor 2 via the memory controller 31 and the audio I/F 39.

The memory controller 31 comprehensively controls data transmission, and is connected to the various I/Fs described above. The controller I/F 36 includes, for example, four controller I/Fs 36a, 36b, 36c and 36d, and communicably connects the game apparatus 3 to an external device which is engageable via connectors of the controller I/Fs 36a, 36b, 36c and 36d. For example, the receiving unit 6 is engaged with such a connector and is connected to the game apparatus 3 via the controller I/F 36. As described above, the receiving unit 6 receives the transmission data from the controller 7 and outputs the transmission data to the CPU 30 via the controller I/F 36. The video I/F 37 is connected to the monitor 2. The external memory I/F 38 is connected to the external memory card 5 and is accessible to a backup memory or the like provided in the external memory card 5. The audio I/F 39 is connected to the speaker 2a built in the monitor 2 such that the sound data read by the DSP 34 from the ARAM 35 or sound data directly outputted from the disc drive 40 can be outputted from the speaker 2a. The disc I/F 41 is connected to the disc drive 40. The disc drive 40 reads data stored at a predetermined reading position of the optical disc 4 and outputs the data to a bus of the game apparatus 3 or the audio I/F 39.

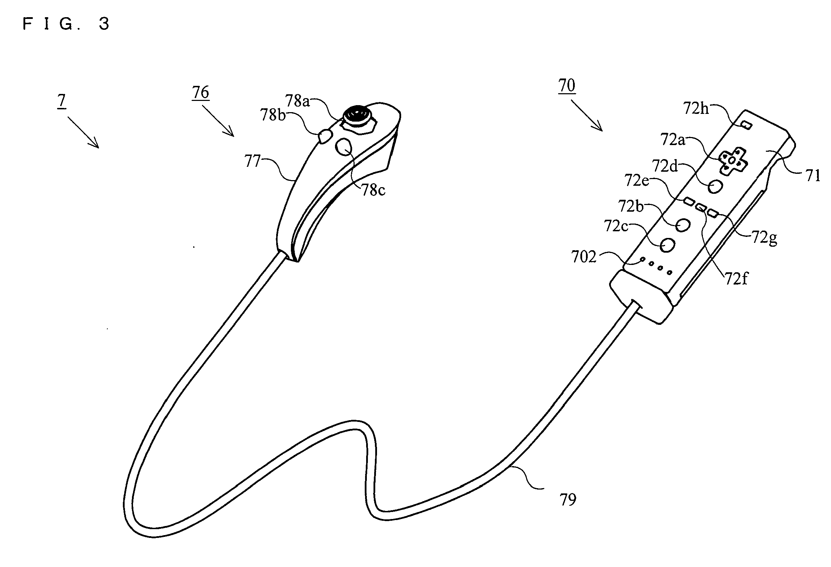

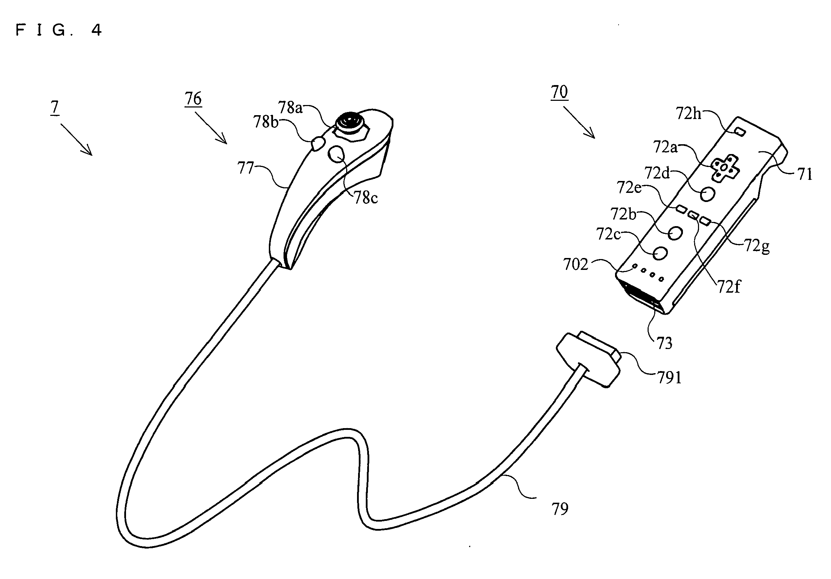

Next, with reference to FIGS. 3 and 4, the controller 7 will be described. FIG. 3 is a perspective view illustrating an outer appearance of the controller 7. FIG. 4 is a perspective view illustrating a state of the connecting cable 79 of the controller 7 shown in FIG. 3 being connected to or disconnected from the core unit 70.

As shown in FIG. 3, the controller 7 includes the core unit 70 and the subunit 76 connected to each other by the connecting cable 79. The core unit 70 has a housing 71 including a plurality of operation sections 72. The subunit 76 has a housing 77 including a plurality of operation sections 78. The core unit 70 and the subunit 76 are connected to each other by the connecting cable 79.

As shown in FIG. 4, the connecting cable 79 has a connector 791 detachably connected to the connector 73 of the core unit 70 at one end thereof, and the connecting cable 79 is fixedly connected to the subunit 76 at the other end thereof. The connector 791 of the connecting cable 79 is engaged with the connector 73 provided at the rear surface of the core unit 70 so as to connect the core unit 70 and the subunit 76 with each other by the connecting cable 79.

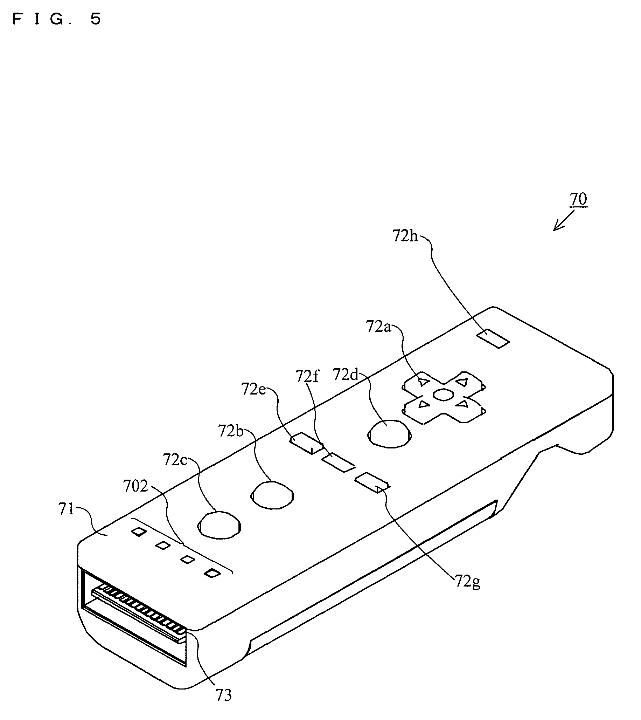

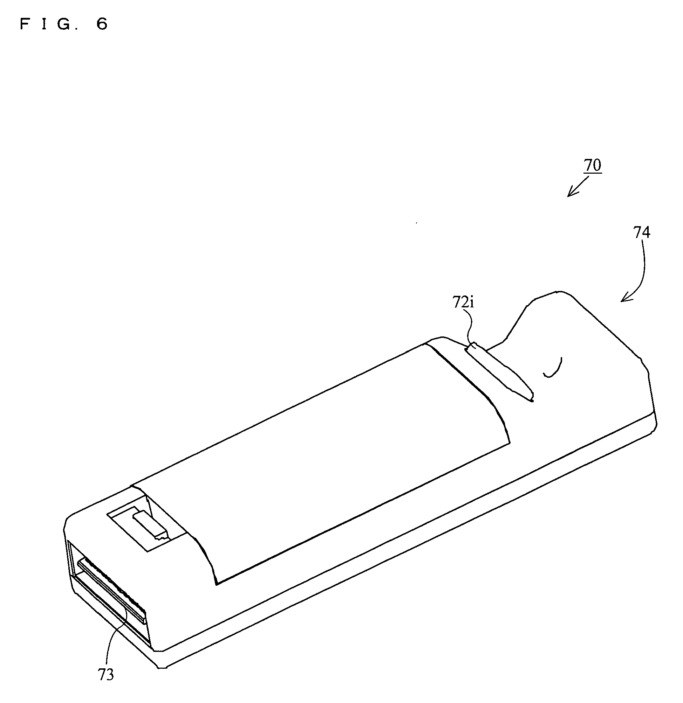

With reference to FIGS. 5 and 6, the core unit 70 will be described. FIG. 5 is a perspective view of the core unit 70 as seen from the top rear side thereof. FIG. 6 is a perspective view of the core unit 70 as seen from the bottom rear side thereof.

As shown in FIGS. 5 and 6, the core unit 70 includes the housing 71 formed by plastic molding or the like. The housing 71 has a generally parallelepiped shape extending in a longitudinal direction from front to rear. The overall size of the housing 71 is small enough to be held by one hand of an adult or even a child.

At the center of a front part of a top surface of the housing 71, a cross key 72a is provided. The cross key 72a is a cross-shaped four-direction push switch. The cross key 72a includes operation portions corresponding to the four directions (front, rear, right and left) represented by arrows, which are respectively located on cross-shaped projecting portions arranged at intervals of 90 degrees. The player selects one of the front, rear, right and left directions by pressing one of the operation portions of the cross key 72a. Through an operation on the cross key 72a, the player can, for example, instruct a direction in which a player character or the like appearing in a virtual game world is to move or a direction in which the cursor is to move.

Although the cross key 72a is an operation section for outputting an operation signal in accordance with the aforementioned direction input operation performed by the player, such an operation section may be provided in another form. For example, the cross key 72a may be replaced with a composite switch including a push switch including a ring-shaped four-direction operation section and a center switch provided at the center thereof. Alternatively, the cross key 72a may be replaced with an operation section which includes an inclinable stick projecting from the top surface of the housing 71 and outputs an operation signal in accordance with the inclining direction of the stick. Still alternatively, the cross key 72a may be replaced with an operation section which includes a disc-shaped member horizontally slidable and outputs an operation signal in accordance with the sliding direction of the disc-shaped member. Still alternatively, the cross key 72a may be replaced with a touch pad. Still alternatively, the cross key 72a may be replaced with an operation section which includes switches representing at least four directions (front, rear, right and left) and outputs an operation signal in accordance with the switch pressed by the player.

Behind the cross key 72a on the top surface of the housing 71, a plurality of operation buttons 72b, 72c, 72d, 72e, 72f and 72g are provided. The operation buttons 72b, 72c, 72d, 72e, 72f and 72g are each an operation section for outputting a respective operation signal assigned to the operation buttons 72b, 72c, 72d, 72e, 72 for 72g when the player presses a head thereof. For example, the operation buttons 72b, 72c, and 72d, are assigned with functions of an X button, a Y button, and a B button. Further, the operation buttons 72e, 72f and 72g are assigned with functions of a select switch, a menu switch and a start switch, for example. The operation buttons 72b, 72c, 72d, 72e, 72f and 72g are assigned with various functions in accordance with the game program executed by the game apparatus 3, but this will not be described in detail because the functions are not directly relevant to the present invention. In an exemplary arrangement shown in FIG. 5, the operation buttons 72b, 72c and 72d are arranged in a line at the center in the front-rear direction on the top surface of the housing 71. The operation buttons 72e, 72f and 72g are arranged in a line in the left-right direction between the operation buttons 72b and 72d on the top surface of the housing 71. The operation button 72f has a top surface thereof buried in the top surface of the housing 71, so as not to be inadvertently pressed by the player.

In front of the cross key 72a on the top surface of the housing 71, an operation button 72h is provided. The operation button 72h is a power switch for remote-controlling the power of the game apparatus 3 to be on or off. The operation button 72h also has a top surface thereof buried in the top surface of the housing 71, so as not to be inadvertently pressed by the player.

Behind the operation button 72c on the top surface of the housing 71, a plurality of LEDs 702 are provided. The controller 7 is assigned a controller type (number) so as to be distinguishable from the other controllers 7. For example, the LEDs 702 are used for informing the player of the controller type which is currently set to controller 7 that he or she is using. Specifically, when the core unit 70 transmits the transmission data to the receiving unit 6, one of the plurality of LEDs 702 corresponding to the controller type is lit up.

On a bottom surface of the housing 71, a recessed portion is formed. As described later in detail, the recessed portion is formed at a position at which an index finger or middle finger of the player is located when the player holds the core unit 70. On a rear slope surface of the recessed portion, an operation button 72i is provided. The operation button 72i is an operation section acting as, for example, an A button. The operation button 72i is used, for example, as a trigger switch in a shooting game, or for attracting attention of a player object to a predetermined object.

On a front surface of the housing 71, an image pickup element 743 included in the imaging information calculation section 74 is provided. The imaging information calculation section 74 is a system for analyzing image data taken by the core unit 70 and detecting the position of the center of gravity, the size and the like of an area having a high brightness in the image data. The imaging information calculation section 74 has, for example, a maximum sampling period of about 200 frames/sec. , and therefore can trace and analyze even a relatively fast motion of the core unit 70. The imaging information calculation section 74 will be described later in detail. On a rear surface of the housing 71, the connector 73 is provided. The connector 73 is, for example, a 32-pin edge connector, and is used for engaging and connecting the core unit 70 with the connector 791 of the connecting cable 79.

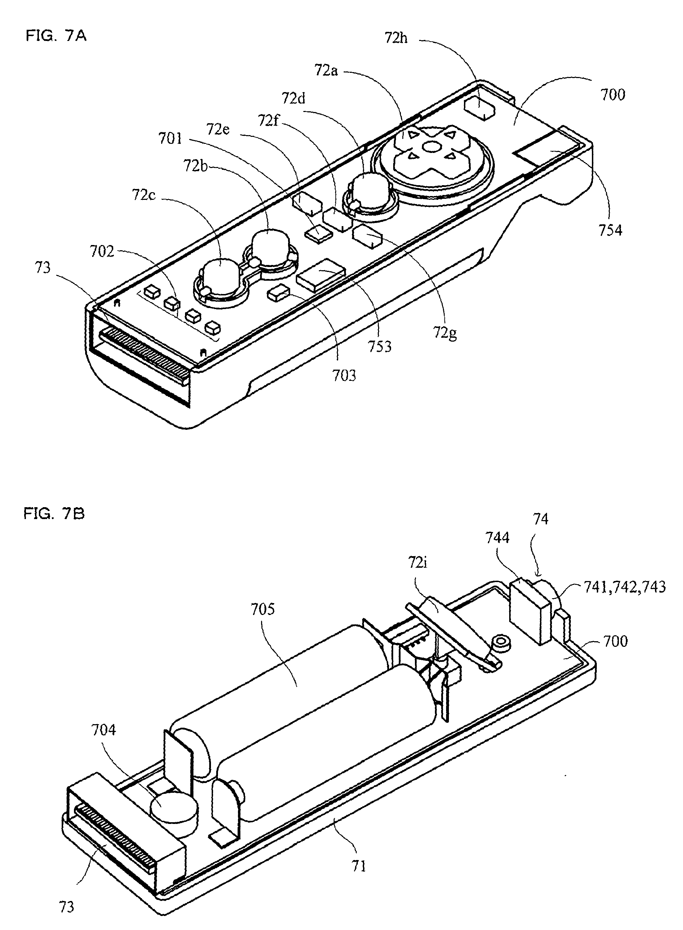

With reference to FIG. 7, an internal structure of the core unit 70 will be described. FIG. 7A is a perspective view illustrating a state where an upper casing (a part of the housing 71) of the core unit 70 is removed. FIG. 7B is a perspective view illustrating a state where a lower casing (a part of the housing 71) of the core unit 70 is removed. FIG. 7B is a perspective view illustrating a reverse side of a substrate 700 shown in FIG. 7A.

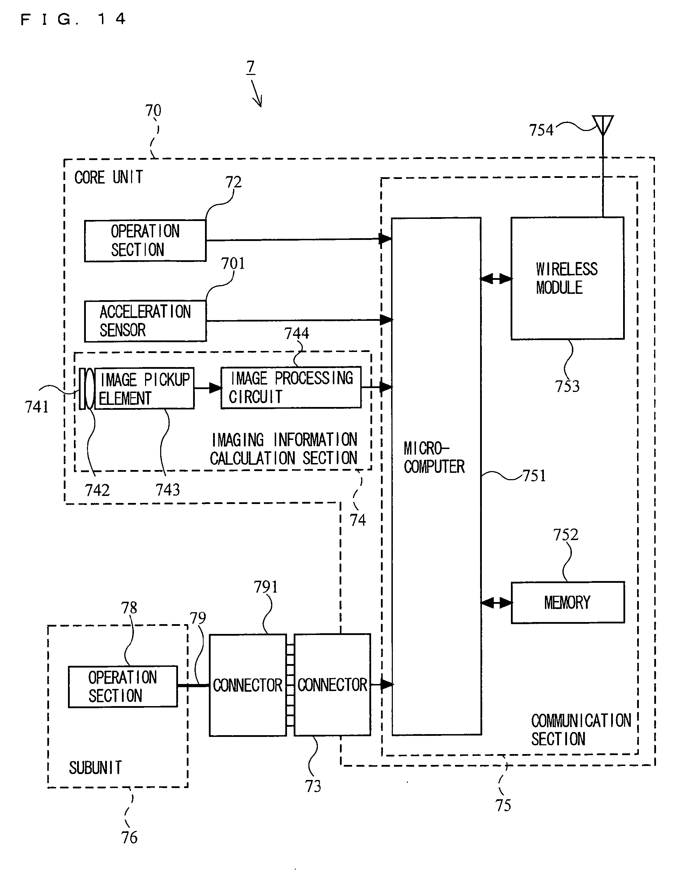

As shown in FIG. 7A, the substrate 700 is fixed inside the housing 71. On a top main surface of the substrate 700, the operation buttons 72a, 72b, 72c, 72d, 72e, 72f, 72g and 72h, an acceleration sensor 701, the LEDs 702, a quartz oscillator 703, a wireless module 753, an antenna 754 and the like are provided. These elements are connected to a microcomputer 751 (see FIG. 14) via lines (not shown) formed on the substrate 700 and the like. The wireless module 753 and the antenna 754 allow the core unit 70 to act as a wireless controller. The quartz oscillator 703 generates a reference clock of the microcomputer 751 described later.

As shown in FIG. 7B, at a front edge of a bottom main surface of the substrate 700, the imaging information calculation section 74 is provided. The imaging information calculation section 74 includes an infrared filter 741, a lens 742, the image pickup element 743 and an image processing circuit 744 located in this order from the front surface of the core unit 70 on the bottom main surface of the substrate 700. At a rear edge of the bottom main surface of the substrate 700, the connector 73 is attached. The operation button 72i is attached on the bottom main surface of the substrate 700 behind the imaging information calculation section 74, and cells 705 are accommodated behind the operation button 72i. On the bottom main surface of the substrate 700 between the cells 705 and the connector 73, a vibrator 704 is attached. The vibrator 704 may be, for example, a vibration motor or a solenoid. The core unit 70 is vibrated by an actuation of the vibrator 704, and the vibration is conveyed to the player's hand holding the core unit 70. Thus, a so-called vibration-feedback game is realized.

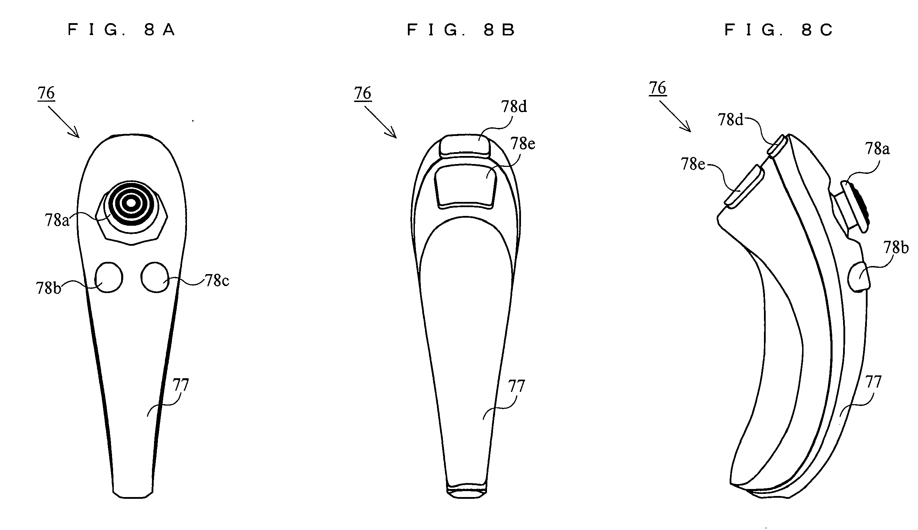

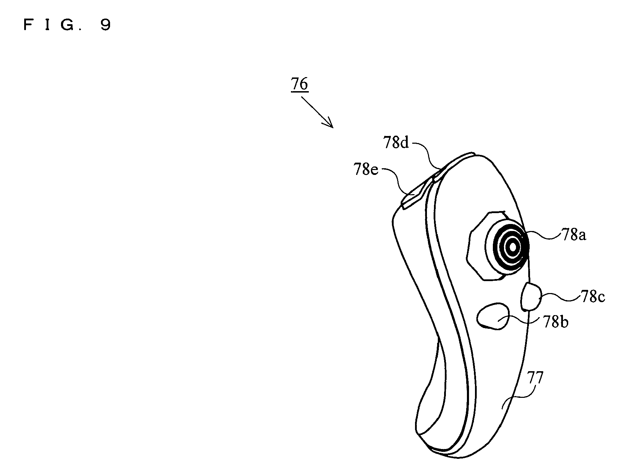

With reference to FIGS. 8A, 8B, 8C and 9, the subunit 76 will be described. FIG. 8A is a top view of the subunit 76. FIG. 8B is a bottom view of the subunit 76. FIG. 8C is a left side view of the subunit 76. FIG. 9 is a perspective view of the subunit 76 as seen from the top front side thereof.

As shown in FIGS. 8A, 8B, 8C and 9, the subunit 76 includes the housing 77 formed by, for example, plastic molding. The housing 77 extends in a longitudinal direction from front to rear, and has a streamline solid shape including a head which is a widest portion in the subunit 76. The overall size of the subunit 76 is small enough to be held by one hand of an adult or even a child.

In the vicinity of the widest portion on the top surface of the housing 77, a stick 78a is provided. The stick 78a is an operation section which includes an inclinable stick projecting from the top surface of the housing 77 and outputs an operation signal in accordance with the inclining direction of the stick. For example, a player can arbitrarily designate a direction and a position by inclining a stick tip in any direction of 360 degrees, whereby the player can instruct a direction in which a player character or the like appearing in a virtual game world is to move, or can instruct a direction in which a cursor is to move.

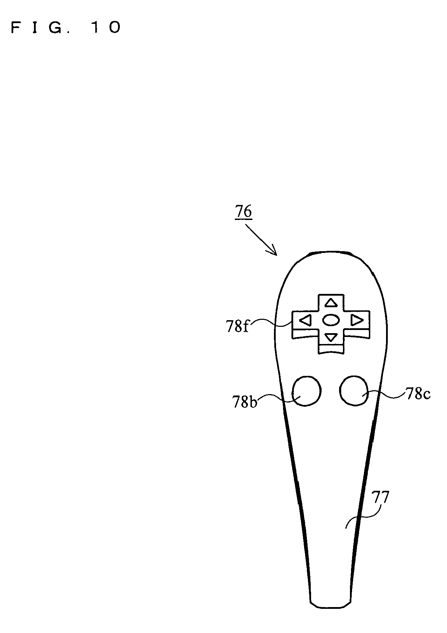

Although the stick 78a is an operation section for outputting an operation signal in accordance with a direction input operation performed by the player as described above, such an operation section may be provided in another form. Hereinafter, with reference to FIGS. 10 to 13, a first through a fifth exemplary modifications, each of which includes the subunit 76 having an operation section for outputting an operation signal in accordance with the direction input operation, will be described.

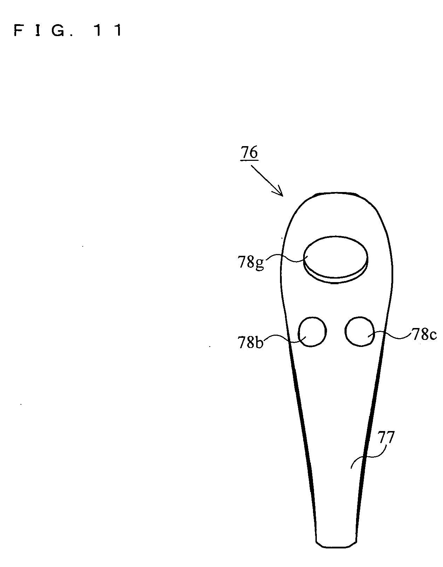

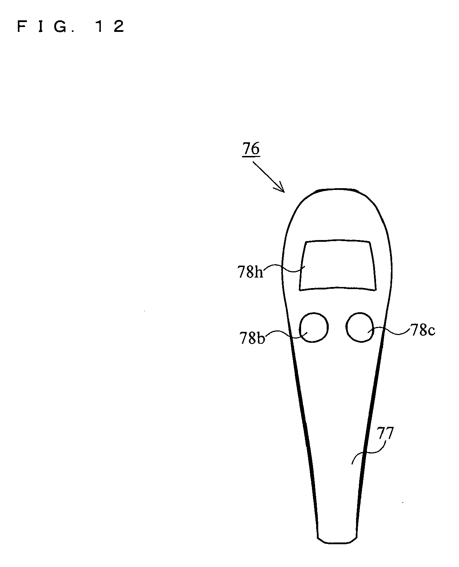

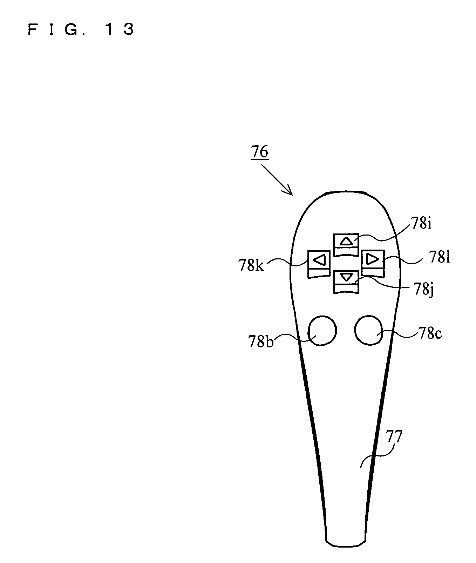

As the first exemplary modification, as shown in FIG. 10, the subunit 76 may include a cross key 78f similar to the cross key 72a of the core unit 70 instead of the stick 78a. As the second exemplary modification, as shown in FIG. 11, the subunit 76 may include a slide pad 78g which includes a disc-shaped member horizontally slidable and outputs an operation signal in accordance with the sliding direction of the disc-shaped member, instead of the stick 78a. As the third exemplary modification, as shown in FIG. 12, the subunit 76 may include a touch pad 78h instead of the stick 78a. As the fourth exemplary modification, as shown in FIG. 13, the subunit 76 may include an operation section which has buttons 78i, 78j, 78k, and 781 representing at least four directions (front, rear, right and left), respectively, and outputs an operation signal in accordance with the button (78i, 78j, 78k, or 781) pressed by a player, instead of the stick 78a. As the fifth exemplary modification, the subunit 76 may include a composite switch including a push switch having a ring-shaped four-direction operation section and a center switch provided at the center thereof, instead of the stick 78a.

Behind the stick 78a on the top surface of the housing 77 and on the front surface of the housing 77, a plurality of operation buttons 78b, 78c, 78d and78e are provided. The operation buttons 78b, 78c, 78d and 78e are each an operation section for outputting a respective operation signal assigned to the operation buttons 72b, 72c, 72d, and 72e when the player presses a head thereof. Forexample, the operation buttons 78b, 78c, 78d and 78e are assigned with functions of an X button, a Y button and the like. Theoperation buttons 78b, 78c, 78d and 78e are assigned with various functions in accordance with the game program executed by the game apparatus 3, but this will not be described in detail because the functions are not directly relevant to the present invention. In the exemplary arrangement shown in FIGS. 8A, 8B, 8C and 9, the operation buttons 78b and 78c are arranged in a line at the center in the left-right direction on the top surface of the housing 77. The operation buttons 78d and 78e are arranged in a line in the front-rear direction on the front surface of the housing 77.

Next, with reference to FIG. 14, an internal structure of the controller 7 will be described. FIG. 14 is a block diagram illustrating the structure of the controller 7.

As shown in FIG. 14, the core unit 70 includes the communication section 75 and the acceleration sensor 701 in addition to the aforementioned operation section 72 and the imaging information calculation section 74.

The imaging information calculation section 74 includes the infrared filter 741, the lens 742, the image pickup element 743 and the image processing circuit 744. The infrared filter 741 allows only infrared light to pass therethrough, among light incident on the front surface of the core unit 70. The lens 742 collects the infrared light which has passed through the infrared filter 741 and outputs the infrared light to the image pickup element 743. The image pickup element 743 is a solid-state image pickup device such as, for example, a CMOS sensor or a CCD. The image pickup element 743 takes an image of the infrared light collected by the lens 742. Accordingly, the image pickup element 743 takes an image of only the infrared light which has passed through the infrared filter 741 and generates image data. The image data generated by the image pickup element 743 is processed by the image processing circuit 744. Specifically, the image processing circuit 744 processes the image data obtained from the image pickup element 743, identifies a spot thereof having a high brightness, and outputs process result data representing the identified position coordinates and size of the area to the communication section 75. The imaging information calculation section 74 is fixed to the housing 71 of the core unit 70. The imaging direction of the imaging information calculation section 74 can be changed by changing the direction of the housing 71. The housing 71 is connected to the subunit 76 by the flexible connecting cable 79, and therefore the imaging direction of the imaging information calculation section 74 is not changed by changing the direction and position of the subunit 76. As described later in detail, a signal can be obtained in accordance with the position and the motion of the core unit 70 based on the process result data outputted by the imaging information calculation section 74.

The core unit 70 preferably includes a three-axis, linear acceleration sensor 701 that detects linear acceleration in three directions, i.e., the up/down direction, the left/right direction, and the forward/backward direction. Alternatively, a two axis linear accelerometer that only detects linear acceleration along each of the up/down and left/right directions (or other pair of directions) may be used in another embodiment depending on the type of control signals desired. As a non-limiting example, the three-axis or two-axis linear accelerometer 701 may be of the type available from Analog Devices, Inc. or STMicroelectronics N.V. Preferably, the acceleration sensor 701 is an electrostatic capacitance or capacitance-coupling type that is based on silicon micro-machined MEMS(microelectromechanicalsystems)technology. However, any other suitable accelerometer technology (e.g., piezoelectric type or piezoresistance type) now existing or later developed may be used to provide the three-axis or two- axis acceleration sensor 701.

As one skilled in the art understands, linear accelerometers, as used in acceleration sensor 701, are only capable of detecting acceleration along a straight line corresponding to each axis of the acceleration sensor. In other words, the direct output of the acceleration sensor 701 is limited to signals indicative of linear acceleration (static or dynamic) along each of the two or three axes thereof. As a result, the acceleration sensor 701 cannot directly detect movement along a non-linear (e.g. arcuate) path, rotation, rotational movement, angular displacement, tilt, position, attitude or any other physical characteristic.

However, through additional processing of the linear acceleration signals output from the acceleration sensor 701, additional information relating to the core unit 70 can be inferred or calculated, as one skilled in the art will readily understand from the description herein. For example, by detecting static, linear acceleration (i.e., gravity), the linear acceleration output of the acceleration sensor 701 can be used to infer tilt of the object relative to the gravity vector by correlating tilt angles with detected linear acceleration. In this way, the acceleration sensor 701 can be used in combination with the micro-computer 751 (or another processor) to determine tilt, attitude or position of the core unit 70. Similarly, various movements and/or positions of the core unit 70 can be calculated or inferred through processing of the linear acceleration signals generated by the acceleration sensor 701 when the core unit 70 containing the acceleration sensor 701 is subjected to dynamic accelerations by, for example, the hand of a user, as explained herein. In another embodiment, the acceleration sensor 701 may include an embedded signal processor or other type of dedicated processor for performing any desired processing of the acceleration signals output from the accelerometers therein prior to outputting signals to micro-computer 751. For example, the embedded or dedicated processor could convert the detected acceleration signal to a corresponding tilt angle when the acceleration sensor is intended to detect static acceleration (i.e., gravity). Data representing the acceleration detected by the acceleration sensor 701 is outputted to the communication section 75.

In another exemplary embodiment, the acceleration sensor 701 may be replaced with a gyro-sensor of any suitable technology incorporating, for example, a rotating or vibrating element. Exemplary MEMS gyro-sensors that may be used in this embodiment are available from Analog Devices, Inc. Unlike the linear acceleration sensor 107, a gyro-sensor is capable of directly detecting rotation (or angular rate) around an axis defined by the gyroscopic element (or elements) therein. Thus, due to the fundamental differences between a gyro-sensor and an linear acceleration sensor, corresponding changes need to be made to the processing operations that are performed on the output signals from these devices depending on which device is selected for a particular application.

More specifically, when a tilt or inclination is calculated using a gyroscope instead of the acceleration sensor, significant changes are necessary. Specifically, when using a gyro-sensor, the value of inclination is initialized at the start of detection. Then, data on the angular velocity which is output from the gyroscope is integrated. Next, a change amount in inclination from the value of inclination previously initialized is calculated. In this case, the calculated inclination corresponds to an angle. In contrast, when an acceleration sensor is used, the inclination is calculated by comparing the value of the acceleration of gravity of each axial component with a predetermined reference. Therefore, the calculated inclination can be represented as a vector. Thus, without initialization, an absolute direction can be determined with an accelerometer. The type of the value calculated as an inclination is also very different between a gyroscope and an accelerometer; i.e., the value is an angle when a gyroscope is used and is a vector when an accelerometer is used. Therefore, when a gyroscope is used instead of an acceleration sensor or vice versa, data on inclination also needs to be processed by a predetermined conversion that takes into account the fundamental differences between these two devices. Due to the fact that the nature of gyroscopes is known to one skilled in the art, as well as the fundamental differences between linear accelerometers and gyroscopes, further details are not provided herein so as not to obscure the remainder of the disclosure. While gyro-sensors provide certain advantages due to their ability to directly detect rotation, linear acceleration sensors are generally more cost effective when used in connection with the controller applications described herein.

The communication section 75 includes the microcomputer 751, a memory 752, the wireless module 753 and the antenna 754. The microcomputer 751 controls the wireless module 753 for wirelessly transmitting the transmission data while using the memory 752 as a storage area during the process.

Data from the core unit 70 including an operation signal (core key data) from the operation section 72, acceleration signals (acceleration data) from the acceleration sensor 701, and the process result data from the imaging information calculation section 74 are outputted to the microcomputer 751. An operation signal (sub key data) from the operation section 78 of the subunit 76 is outputted to the microcomputer 751 via the connecting cable 79. The microcomputer 751 temporarily stores the input data (core key data, sub key data, acceleration data, and process result data) in the memory 752 as the transmission data which is to be transmitted to the receiving unit 6. The wireless transmission from the communication section 75 to the receiving unit 6 is performed periodically at a predetermined time interval. Since game process is generally performed at a cycle of 1/60 sec., the wireless transmission needs to be performed at a cycle of a shorter time period. Specifically, the game process unit is 16.7 ms (1/60 sec.), and the transmission interval of the communication section 75 structured using the Bluetooth (registered trademark) technology is 5 ms. At the transmission timing to the receiving unit 6, the microcomputer 751 outputs the transmission data stored in the memory 752 as a series of operation information to the wireless module 753. The wireless module 753 uses, for example, the Bluetooth (registered trademark) technology to transmit the operation information from the antenna 754 as a carrier wave signal of a predetermined frequency. Thus, the core key data from the operation section 72 included in the core unit 70, the sub key data from the operation section 78 included in the subunit 76, acceleration data from the acceleration sensor 701, and the process result data from the imaging information calculation section 74 are transmitted from the core unit 70. The receiving unit 6 of the game apparatus 3 receives the carrier wave signal, and the game apparatus 3 demodulates or decodes the carrier wave signal to obtain the series of operation information (the core key data, the sub key data, the acceleration data, and the process result data). Based on the obtained operation information and the game program, the CPU 30 of the game apparatus 3 performs the game process. In the case where the communication section 75 is structured using the Bluetooth (registered trademark) technology, the communication section 75 can have a function of receiving transmission data which is wirelessly transmitted from other devices. The acceleration data and/or process result data are included in first operation data and the sub key data is included in the second operation data.

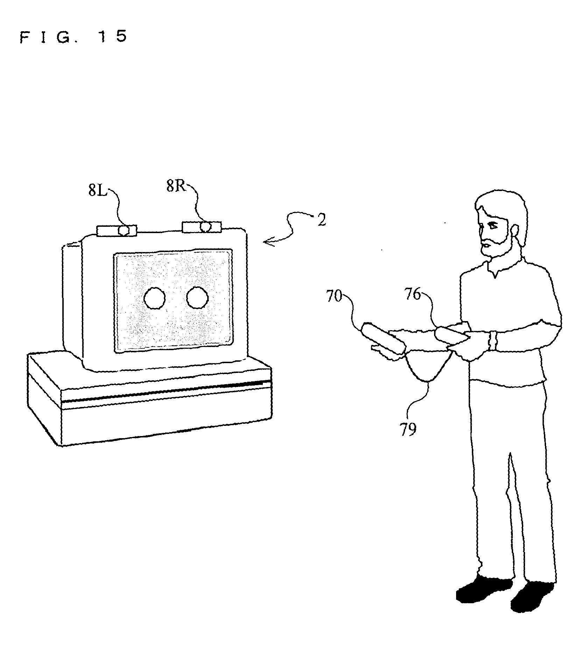

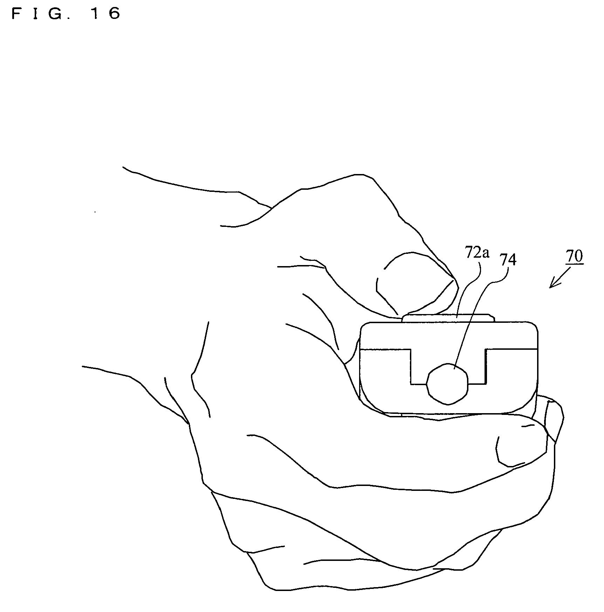

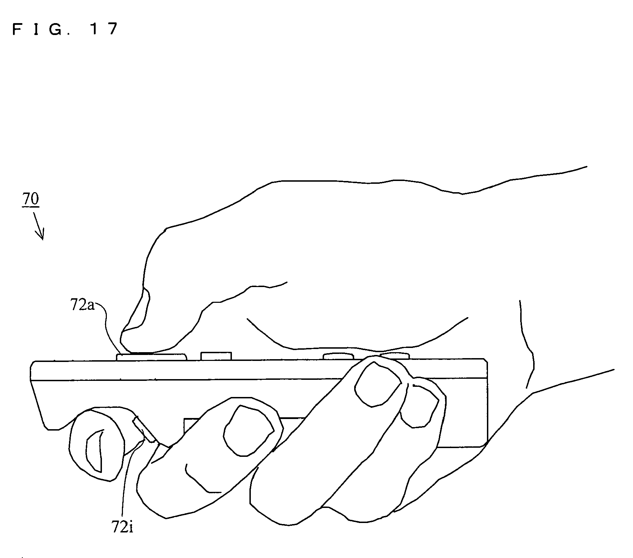

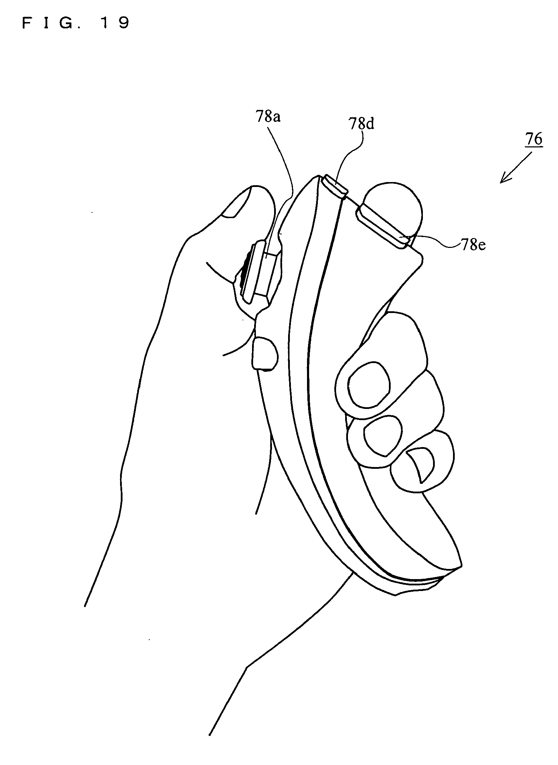

As shown in FIG. 15, in order to play a game using the controller 7 with the game system 1, a player holds the core unit 70 with one hand (for example, a right hand) (see FIGS. 16 and 17), and holds the subunit 76 with the other hand (for example, a left hand) (see FIG. 19). The player holds the core unit 70 so as to point the front surface of the core unit 70 (that is, a side having an entrance through which light is incident on the imaging information calculation section 74 taking an image of the light) to the monitor 2. On the other hand, two LED modules 8L and 8R are provided in the vicinity of the display screen of the monitor 2. The LED modules 8L and 8R each outputs infrared light forward from the monitor 2.

When a player holds the core unit 70 so as to point the front surface thereof to the monitor 2, infrared lights outputted by the two LED modules 8L and 8R are incident on the imaging information calculation section 74. The image pickup element 743 takes images of the infrared lights incident through the infrared filter 741 and the lens 742, and the image processing circuit 744 processes the taken images. The imaging information calculation section 74 detects infrared components outputted by the LED modules 8L and 8R so as to obtain positions (a position of a subject image) and area information of the LED modules 8L and 8R in the taken images. Specifically, the image processing circuit 744 analyzes image data taken by the image pickup element 743, eliminates images which do not represent the infrared lights outputted by the LED modules 8L and 8R from the area information, and further identifies points each having a high brightness as positions of the LEDmodules 8L and 8R. The imaging information calculation section 74 obtains positional information such as the center of gravity of each of the identified points having the high brightness and outputs the positional information as the process result data. Here, as the positional information outputted as the process result data, a coordinate value based on a predetermined originating reference point (for example, the center or the upper left corner of the taken image) in the taken image may be outputted, or a difference between a reference point having a high brightness identified at a predetermined timing and a currently identified point having a high brightness may be outputted as a vector. That is, in the case where a predetermined reference point is set in the image taken by the image pickup element 743, the positional information of the subject image represents a parameter corresponding to a difference from the predetermined reference point. When such process result data is transmitted to the game apparatus 3, the game apparatus 3 can obtain, based on the difference between a value represented by the positional information and a value represented by the reference point, an amount by which a signal changes in accordance with a motion, a posture, a position and the like of the imaging information calculation section 74, i.e., the core unit 70, with respect to the LED modules 8L and 8R. Specifically, the position having a high brightness in the image obtained through the communication section 75 is changed in accordance with the motion of the core unit 70, and therefore a direction input or coordinate input is performed in accordance with the position having the high brightness being changed, thereby enabling the direction input or the coordinate input to be performed along the moving direction of the core unit 70. In an exemplary game process described later, the imaging information calculation section 74 obtains coordinates of the center of gravity for each subject image of the LED modules 8L and 8R in the taken image, and outputs the coordinates of the center of gravity as the process result data.

Thus, the imaging information calculation section 74 of the core unit 70 takes images of stationary markers (infrared lights from the two LEDmodules 8L and 8R in the present embodiment), and the game apparatus 3 processes data outputted by the core unit 70 during the game process, whereby enabling an operation to be performed in accordance with the motion, posture, position and the like of the controller. Therefore, an operation input, which is different from an input made by pressing an operation button or using an operation key, is intuitively performed. As described above, since the markers are provided in the vicinity of the display screen of the monitor 2, the motion, posture, position and the like of the core unit 70 with respect to the display screen of the monitor 2 can be easily calculated based on positions from the markers. That is, the process result data used for obtaining the motion, posture, position and the like of the core unit 70 can be used as operation input immediately applied to the display screen of the monitor 2.

With reference to FIGS. 16 and 17, a state of a player holding the core unit 70 with one hand will be described. FIG. 16 shows an exemplary state of a player holding the core unit 70 with a right hand as seen from the front surface side of the core unit 70. FIG. 17 shows an exemplary state of a player holding the core unit 70 with a right hand as seen from the left side of the core unit 70.

As shown in FIGS. 16 and 17, the overall size of the core unit 70 is small enough to be held by one hand of an adult or even a child. When the player puts a thumb on the top surface of the core unit 70 (for example, near the cross key 72a), and puts an index finger in the recessed portion on the bottom surface of the core unit 70 (for example, near the operation button 72i), the light entrance of the imaging information calculation section 74 on the front surface of the core unit 70 is exposed forward to the player. It should be understood that also when the player holds the core unit 70 with a left hand, the holding state is the same as that described for the right hand.

Thus, the core unit 70 allows a player to easily operate the operation section 72 such as the cross key 72a or the operation button 72i while holding the core unit 70 with one hand. Further, when the player holds the core unit 70 with one hand, the light entrance of the imaging information calculation section 74 on the front surface of the core unit 70 is exposed, whereby the light entrance can easily receive infrared lights from the aforementioned two LED modules 8L and 8R. That is, the player can hold the core unit 70 with one hand without preventing the imaging information calculation section 74 of the core unit 70 from functioning. That is, when the player moves his or her hand holding the core unit 70 with respect to the display screen, the core unit 70 can further perform an operation input enabling a motion of the player's hand to directly act on the display screen.

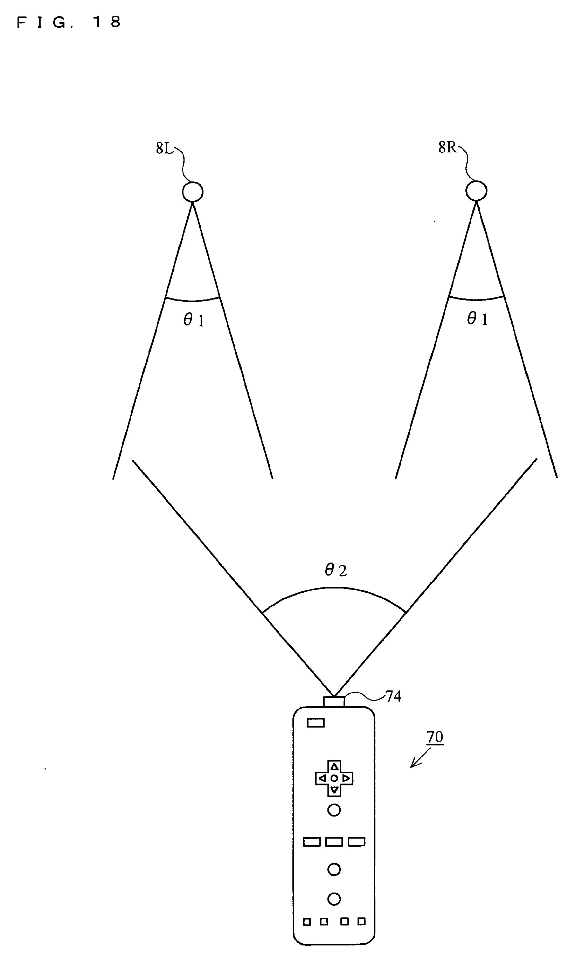

As shown in FIG. 18, the LED modules 8L and 8R each has a viewing angle θ1. The image pickup element 743 has a viewing angle θ2. For example, the viewing angle θ1 of the LED modules 8L and 8R is 34 degrees (half-value angle), and the viewing angle θ2 of the image pickup element 743 is 41 degrees. When both the LED modules 8L and 8R are in the viewing angle θ2 of the image pickup element 743, and the image pickup element 743 is in the viewing angle θ1 of the LED module 8L and the viewing angle θ1 of the LED module 8R, the game apparatus 3 determines a position of the core unit 70 using positional information relating to the points having high brightness of the two LED modules 8L and 8R.

When either the LED module 8L or LED module 8R is in the viewing angle θ2 of the image pickup element 743, or when the image pickup element 743 is in either the viewing angle θ1 of the LED module 8L or the viewing angle θ1 of the LED module 8R, the game apparatus 3 determines a position of the core unit 70 using the positional information relating to the points having high brightness of the LED module 8L or the LED module 8R.

Next, with reference to FIG. 19, a state of a player holding the subunit 76 with one hand will be described. FIG. 19 shows an exemplary state of a player holding the subunit 76 with a left hand as seen from the right side of the subunit 76.

As shown in FIG. 19, the overall size of the subunit 76 is small enough to be held by one hand of an adult or even a child. For example, a player can put a thumb on the top surface of the subunit 76 (for example, near the stick 78a), put an index finger on the front surface of the subunit 76 (for example, near the operation buttons 78d and 78e), and put a middle finger, a ring finger and a little finger on the bottom surface of the subunit 76 so as to hold the subunit 76. It should be understood that also when the player holds the subunit 76 with a right hand, the holding state is similar to that described for the left hand. Thus, the subunit 76 allows the player to easily operate the operation section 78 such as the stick 78a and the operation buttons 78d and 78e while holding the subunit 76 with one hand.

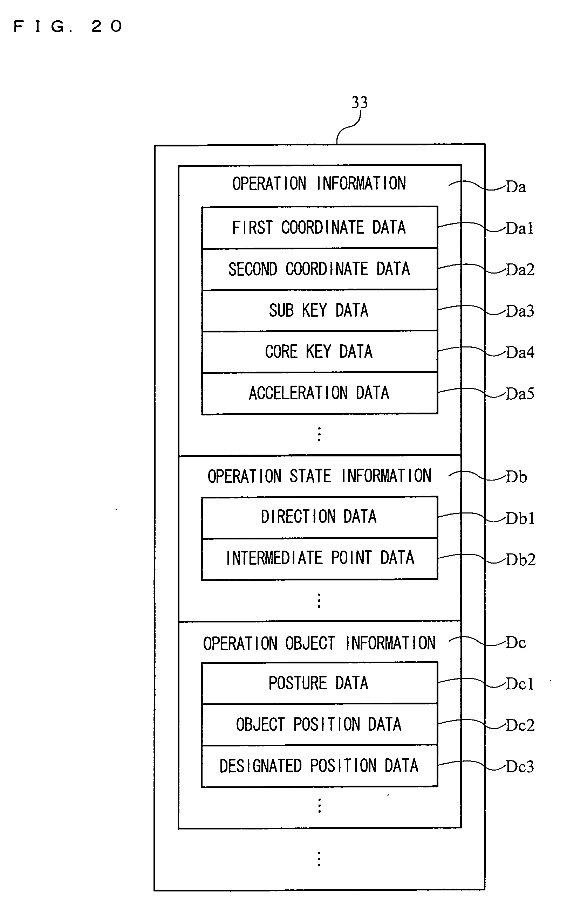

Next, a game process performed by the game system 1 will be described in detail. Initially, with reference to FIG. 20, main data used for the game process will be described. FIG. 20 is a diagram illustrating main data stored in the main memory 33 of the game apparatus 3.

As shown in FIG. 20, the main memory 33 stores operation information Da, operation state information Db, operation object information Dc, and the like. The main memory 33 stores data necessary for the game process such as data relating to a player character appearing in the game (image data, position data and the like of the player character), data relating to a game space (for example, topography data), and the like, in addition to data contained in the information shown in FIG. 20.

The operation information Da is a series of operation information transmitted as transmission data from the controller 7, and is updated to the latest operation information. The operation information Da includes first coordinate data Da1 and second coordinate data Da2 corresponding to the process result data described above. The first coordinate data Da1 represents coordinates of a position (a position in the taken image) of an image of one of the two markers (the LED modules 8L and 8R) in the image taken by the image pickup element 743. The second coordinate data Da2 represents coordinates of a position (a position in the taken image) of an image of the other marker. For example, the position of the image of the marker is represented using an x-y coordinate system of the taken image.

Further, the operation information Da includes sub key data Da3 obtained by the operation section 78, core key data Da4 obtained by the operation section 72, acceleration data Da5 obtained by the acceleration sensor 701, and the like, in addition to the coordinate data (the first coordinate data Da1 and the second coordinate data Da2) included in the process result data obtained from the taken image. The receiving unit 6 of the game apparatus 3 receives operation information Da transmitted from the controller 7 at regular time intervals, for example, every 5 ms, and stores the operation information Da in a buffer (not shown) of the receiving unit. Thereafter, the operation information Da is read at game process intervals, for example, every one frame (every 1/60 seconds), and the latest operation information is stored in the main memory 33.

The operation state information Db represents an operation state of the controller 7 determined based on the taken image. The operation state information Db indicates a position and a direction of the subject image (marker) contained in the taken image, and specifically includes direction data Db1 and intermediate point data Db2. The direction data Db1 indicates a direction from a position represented by the first coordinate data Da1 to a position represented by the second coordinate data Da2. Here, the direction data Db1 represents a vector starting at the position represented by the first coordinate data Da1 and ending at the position represented by the second coordinate data. Da2. The intermediate point data Db2 indicates coordinates of an intermediate point between the position represented by the first coordinate data Da1 and the position represented by the second coordinate data Da2. Here, when an image of the two markers (LED modules 8L and 8R) is regarded as one subject image, the intermediate point data Db2 indicates a position of the subject image.

The operation object information Dc indicates a posture and a position of an operation object or a designated position on the screen or in the game space. Here, the operation object is an object displayed on the screen and an object appearing in a virtual game space. In addition thereto, when a three-dimensional virtual game space is constructed, the operation object may be a virtual camera for displaying the virtual game space on the screen. Further, the operation object information Dc includes posture data Dc1, object position data Dc2 and designated position data Dc3. The posture data Dc1 represents a posture of the operation object. The object position data Dc2 represents a position of the operation object in the game space or on the screen. The designated position data Dc3 represents a position which is on the screen of the monitor 2, designated by the core unit 70, and obtained based on the first coordinate data Da1 and the second coordinate data Da2.

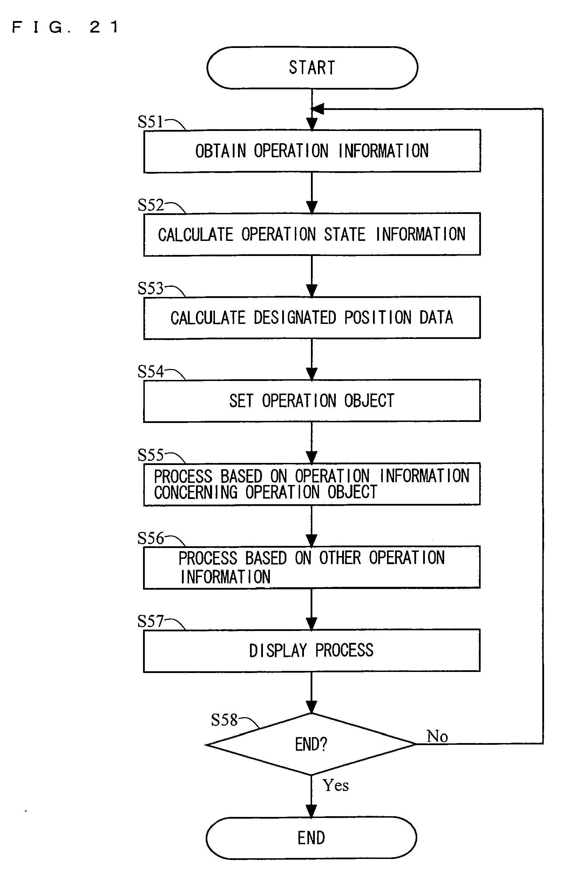

Next, with reference to FIG. 21, the game process performed by the game apparatus 3 will be described in detail. FIG. 21 is a flow chart illustrating a flow of a game process performed by the game apparatus 3. When the game apparatus 3 is powered on, the CPU 30 of the game apparatus 3 executes a boot program stored in a boot ROM not shown so as to initialize each unit such as the main memory 33. The game program stored in the optical disc 4 is loaded to the main memory 33 and the CPU 30 starts to execute the game program. The flow chart of FIG. 21 shows a game process performed after these processes are completed. The flow chart of FIG. 21 shows only a game process performed based on a game operation using the controller 7, and other game processes, which are not directly relevant to the present invention, are not described in detail. In FIG. 21, each step executed by the CPU 30 is abbreviated as "S".

As shown in FIG. 21, the CPU 30 obtains operation information having been received from the controller 7 in step 51, and advances the process to the next step. The CPU 30 stores the obtained operation information as the operation information Da in the main memory 33. The operation information obtained in step 51 includes data (sub key data Da3 and core key data Da4) indicating how the operation section 72 of the core unit 70 and the operation section 78 of the subunit 76 are operated, and data (acceleration data Da5) indicating an acceleration detected by the acceleration sensor 701, in addition to the coordinate data (the first coordinate data Da1 and the second coordinate data Da2) indicating positions of the LED modules 8L and 8R in the taken image. Here, the communication section 75 transmits the operation information to the game apparatus 3 at regular time intervals, for example, at intervals of 5 ms. The CPU 30 uses the operation information for each frame. Accordingly, a process loop of steps 51 to 58 shown in FIG. 21 is one frame which is repeatedly executed.

Next, the CPU 30 calculates the operation state information in step 52, and advances the process to the next step. In the process of calculating the operation state information, the CPU 30 calculates the operation state of the core unit 70 such as a motion, position, and posture of the core unit 70 based on the first coordinate data Da1 and the second coordinate data Da2 which are transmitted from the controller 7 and stored.

In step 52, the CPU 30 calculates the direction data Db1 representing a direction from a position represented by the first coordinate data Da1 to a position represented by the second coordinate data Da2. Specifically, the CPU 30 calculates a vector starting at the position represented by the first coordinate data Da1 and ending at the position represented by the second coordinate data Da2, with reference to the first coordinate data Da1 and the second coordinate data Da2. The CPU 30 stores data of the vector having been calculated as the direction data Db1 in the main memory 33. A rotation about an axis perpendicular to an imaging surface of the core unit 70 can be calculated based on a difference between the direction represented by the direction data Db1 and a predetermined reference direction.

Further, the CPU 30 calculates the intermediate point data Db2 representing an intermediate point between the position represented by the first coordinate data Da1 and the position represented by the second coordinate data Da2. Specifically, the CPU 30 calculates coordinates of the intermediate point with reference to the first coordinate data Da1 and the second coordinate data Da2. The CPU 30 stores data of the intermediate point coordinates having been calculated as the intermediate point data Db2 in the main memory 33. Here, the intermediate point data Db2 represents a position of the subject image (the LED modules 8L and 8R) in the taken image. Change in image position can be calculated in accordance with change in position of the core unit 70 based on a difference between the position represented by the intermediate point data Db2 and a predetermined reference position.

Next, the CPU 30 calculates the designated position data in step 53, and advances the process to the next step. The CPU 30 calculates the designated position data Dc3 using the direction data Db1 and the intermediate point data Db2 having been calculated in step 52.

For example, a case where a player designates the center of the screen of the monitor 2 having the two LED modules 8L and 8R on the top surface thereof (see FIG. 15) by using the core unit 70 having its top surface pointed upward will be described, that is, a case where the center of the screen appears at the center of the image taken by the imaging information calculation section 74 will be described. In this case, in the image taken by the imaginginformation calculationsection74,theintermediate point of the subj ect image (the intermediate point between the LED modules 8L and 8R) does not coincide with the designated position (the center of the screen). Specifically, the position of the subject image in the taken image is upward to the center of the taken image. For example, a reference position is set such that when the subject image is positioned upward to the center of the taken image as described above, it is determined that the center of the screen is designated. In this case, the designated position on the screen is moved in accordance with the position of the subject image in the taken image moving in accordance with the motion of the core unit 70 (the moving directions are reverse to each other), and therefore a position on the screen can be designated in accordance with the moving direction of the core unit 70. In order to set the reference position, when a user previously designates a predetermined position on the screen as described above, the position of the subject image at this time may be associated with a reference designated position and stored. Alternatively, when the position of the subject image is fixed with respect to the screen, the reference position may be predetermined. The designated position is calculated using a function for calculating coordinates (designated position data Dc3) on the screen of the monitor 2 based on the intermediate point data Db2. Using the function, a coordinate value of the intermediate point calculated using a certain image being taken is converted into coordinates representing a position (designated position) on the screen designated by the core unit 70 which is taking the certain image. Using the function, the designated position on the screen can be calculated based on the coordinates of the intermediate point. When the coordinates of the intermediate point are converted into coordinates representing a position in a game space, the position on the screen calculated using the aforementioned function may be converted into a position in the game space corresponding to the position on the screen. The position in the game space corresponding to the position on the screen is a position in the game space displayed at the position on the screen.

However, when a player designates the center of the screen of the monitor 2 using the core unit 70 having its top surface pointed in a direction (for example, the right direction) other than the upward direction, the position of the subject image in the taken image is offset from the center of the taken image in a direction (for example, the left direction) other than the upward direction. That is, since the core unit 70 is inclined, the moving direction of the core unit 70 does not coincide with a direction in which the designated position is to move on the screen. In this case, the intermediate point data Db2 is corrected based on the direction data Db1. Specifically, the intermediate point data Db2 calculated in step 52 is corrected so as to represent the coordinates of the intermediate point obtained when the core unit 70 has its top surface pointed upward. More specifically, a reference of the direction data is set when the reference position is set, and a position of the coordinates represented by the intermediate point data Db2 calculated in step 52 is rotated about the center of the taken image by an amount corresponding to an angular difference between the direction represented by the direction data Db1 and the reference direction so as to correct the intermediate point data Db2. Using the intermediate point data Db2 having been corrected, the designated position data Dc3 is calculated as described above.

Next, the CPU 30 sets an operation obj ect to be controlled by the controller 7 in step 54, and advances the process to the next step. The CPU 30 sets the respective operation objects of the respective operation sections, the imaging information calculation section 74, the sensor and the like in the controller 7.

For example, the operation object is changed depending on a game progress or a player's operation as necessary. For example, the operation object designated by a signal from the imaging information calculation section 74 of the core unit 70 is set as an object positioned at a position in the virtual game world having been converted from the designated position. Further, when a menu screen is displayed on the monitor 2 so as to allow a player to select from a plurality of choices, the operation obj ect designated by a signal from the imaging information calculation section 74 is set as one of the plurality of choices displayed on the designated position. The operation object of the stick 78a on the subunit 76 is set as one of objects which appear in the virtual game world and are currently displayed on the monitor 2.

Alternatively, the operation object may be fixedly set. For example, the operation object of the stick 78a on the subunit 76 is fixed as a player character appearing in the virtual game space. The operation object designated by a signal from the imaging information calculation section 74 of the core unit 70 is fixed as a cursor such as a target cursor displayed on the monitor 2 or the virtual camera for displaying the virtual game space on the screen. When the operation object is fixedly set, it is unnecessary that the operation object is repeatedly set for each process loop. Therefore, step 54 may be performed only in the initialization of the game process.

Next, the CPU 30 performs a process on the operation object in step 55. In step 55, the CPU 30 performs the process on the operation object set in step 54 in accordance with the operation information Da, and updates the posture data Dc1 and the object position data Dc2. For example, when the operation object of the stick 78a is the player character or the virtual camera, the position of the player character or the virtual camera is moved or the direction of the virtual camera is changed in accordance with the sub key data Da3 of the stick 78a. When the operation object of the imaging information calculation section 74 in the core unit 70 is the target cursor, the virtual camera, or the menu screen, the position of the target cursor is moved, the direction of the virtual camera is changed or one or more choices are selected from the menu screen. In step 56, the CPU 30 performs processes in accordance with other operation information Da which have not been used in step 55, and advances the process to the next step. An exemplary process based on the operation information Da will be specifically described later.

Next, the CPU 30 performs display process in step 57 and advances the process to the next step. The CPU 30 generates a game image with reference to the operation object information Dc and data necessary for generating the game image (image data and position data of a player character, topography data and the like), which are stored in the main memory 33. The CPU 30 displays the generated image on the screen of the monitor 2.

Next, the CPU 30 determines in step 58 whether or not the game is to be ended. When a game end condition is satisfied, for example, when the game is over since a parameter indicating a physical capacity of the player character is zero, or when a player performs an operation for ending the game, the game is to be ended. When the game is not to be ended, the CPU 30 returns the process to step 51 and repeats the process. When the game is to be ended, the CPU 30 ends the process according to the flow chart.

Thus, the imaging information calculation section 74 of the core unit 70 takes images of the stationary markers (infrared lights from the two LEDmodules 8L and 8R in the present embodiment), whereby a function of an apparatus for intuitively performing an operation in accordance with a position of the core unit 70 based on the markers can be realized. The game apparatus 3 uses a position of the core unit 70 as operation data based on a player' s operation during the game process so as to provide an operation input which is different from an operation input by pressing an operation button or by using an operation key. As described above, the markers are provided in the vicinity of the display screen of the monitor 2, whereby a position of the core unit 70 based on the markers can be easily converted into a position of the core unit 70 on the display screen of the monitor 2. That is, the operation data relating to a position and a posture of the core unit 70 can be used as an operation input directly acting on the display screen of the monitor 2.

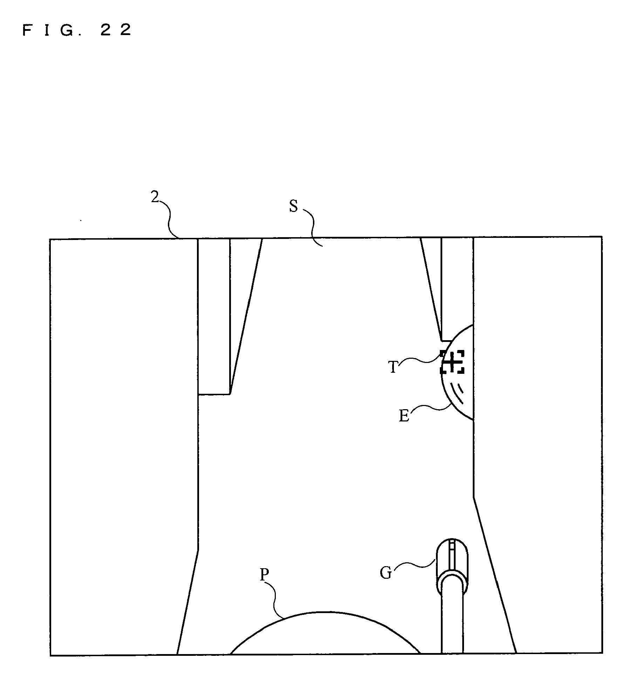

Here, an exemplary game played using the aforementioned controller 7 will be described. As a first example, a shooting game played using the controller 7 will be described. FIG. 22 is a diagram illustrating an exemplary game image displayed on the monitor 2 when the game apparatus 3 executes the shooting game as the first example.

As shown in FIG. 22, a portion of a three-dimensional virtual game space S is displayed on the display screen of the monitor 2. As a game object acting in accordance with an operation of the controller 7, a portion of the player character P and a portion of a gun G held by the player character P are displayed on the display screen. Moreover, the virtual game space S displayed on the display screen represents a field of front vision of the player character P, and for example an opponent character E is displayed as a shooting target in FIG. 22. A target to be shot by the player character P with the gun G is displayed on the display screen as the target cursor T.

In the shooting game having such a game image displayed on the monitor 2, a player operates the core unit 70 with one hand and operates the subunit 76 with the other hand as shown in FIG. 15 so as to play the game. The operation object of the stick 78a on the subunit 76 is fixedly set as the player character P. Further, the operation object of the imaging information calculation section 74 of the core unit 70 is fixedly set as the target cursor T. When the operation objects are set as described above, the player inclines the stick 78a on the subunit 76, whereby the player character P is moved in the virtual game space S in accordance with the inclining direction. Further, the player moves his or her hand holding the core unit 70 with respect to the display screen, whereby a designated position on the monitor 2 having the LEDmodules 8L and 8R is set and the target cursor T is moved to the designated position. When the player presses the operation button 72i (shown in FIG. 6) on the core unit 70, the player character P shoots the gun G at a position in the virtual three-dimensional space corresponding to a position of the target cursor T. When the opponent character E is at the shooting position, the opponent character E is damaged or destroyed.

That is, while the player uses the stick 78a on the subunit 76 so as to instruct the player character P to move, the player can operate the core unit 70 as if the core unit 70 is a gun for the shooting game, thereby enhancing enjoyment in playing a shooting game. Further, since a direction in which a position designated by the core unit 70 is to move with respect to the screen of the monitor 2 is the same as a direction in which the target cursor T is to move, the player can easily and intuitively recognize the operation direction. The player can perform an operation of moving the player character P and an operation of moving the target cursor T by using respective units held by different hands, whereby the player can perform the respective operations as independent ones. For example, since the virtual game space S displayed on the display screen is changed in accordance with the movement of the player character P, it is sometimes difficult to keep the target positioned near a position observed by the player in the virtual game space S because, for example, the player may be paying attention to the opponent character E suddenly jumping into the virtual game space S. However, while the player is moving the player character P with one hand (for example, a thumb of a left hand), the player can move the arm (for example, a right arm) which is not used for moving the player character P such that a position designated by the core unit 70 coincides with the observed position, thereby substantially enhancing flexibility for operating the controller 7 and increasing the reality of the shooting game. Since a player can perform a direction indication operation for moving the player character P and a direction indication operation for moving the target cursor T without one operation influencing the other, the player can perform two stable direction instruction operations. That is, by using the controller 7, the player can freely use his or her left and right hands and can perform a new operation which has increased flexibility and which cannot be achieved using a physically single controller. Further, the player can use the two units based on his or her dominant hand.

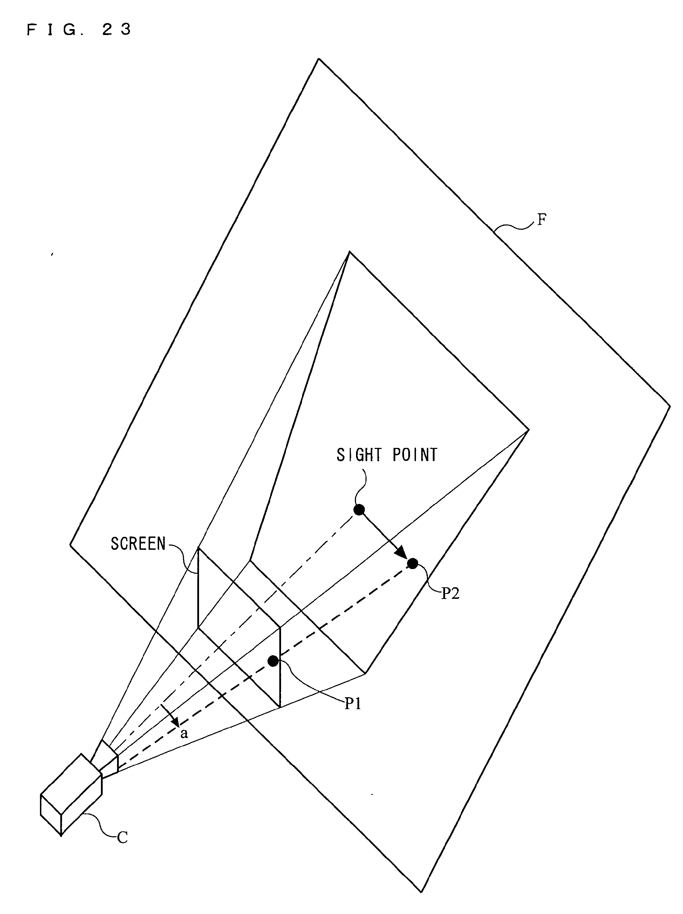

With reference to FIG. 23, a second example in which a game is played using the aforementioned controller 7 will be described. FIG. 23 is a diagram illustrating a state of the virtual camera C used when the game apparatus 3 generates a game image as the second example.

As shown in FIG. 23, an image of a game field F as seen from the virtual camera C is generated as a game image. As in the first example, a player operates the core unit 70 with one hand and operates the subunit 76 with the other hand so as to play the game. The operation object of the stick 78a on the subunit 76 is fixedly set as the player character P. The operation object of the imaging information calculation section 74 in the core unit 70 is fixedly set as the virtual camera C. When the operation objects are fixedly set as described above, the player inclines the stick 78a on the subunit 76, there by moving the player character P on the game field F in accordance with the inclining direction. Further, the player moves his or her hand holding the core unit 70 with respect to the display screen, thereby setting a designated position P1 on the screen of the monitor 2. The designated position P1 on the screen is converted into a position P2 in the game space corresponding to a position on the screen. At this time, the virtual camera C has its imaging direction changed to a direction indicated by "a" shown in FIG. 23 such that a sight point of the virtual camera C follows the position P2. That is, the player moves his or her hand holding the core unit 70 with respect to the display screen, whereby the sight point of the virtual camera C moves so as to follow a position designated on the monitor 2. In this case, the operation of the core unit 70 changes a state of the screen display, resulting in the designated position being moved in the virtual three-dimensional space. Therefore, when the virtual camera C is operated using the core unit 70, another operation key and the like are also used to move the virtual camera C for causing its sight point to follow a position designated at the instant of pressing the operation key. Alternatively, the designated position may not be used as the sight point, and an amount by which the designated position is moved while the key is being kept pressed is calculated, and the virtual camera C may be moved such that its sight point is moved in accordance with the amount.

In the aforementioned operations, while the player is operating the stick 78a on the subunit 76 so as to instruct the player character P to move, the player can observe a position on the game field F designated by the core unit 70. For example, in a game having a shooting target fixedly set at the center of the screen, the shooting target is caused to follow a position designated by the core unit 70 through the operation described as the second example. Conventionally, in order to change the facing direction of the player character P, it is necessary to keep the operation section such as the stick inclined, thereby preventing the player character P from quickly changing its facing direction. Further, a relationship between the direction in which the stick is inclined and the direction on the screen depends on each player and therefore it is necessary to provide a "reverse" mode for allowing the player to set his or her desired direction. However, according to the second example, in a game having the sight point of the virtual camera C fixedly set as a position observed by the player character P, and the like, when a speed at which the sight point is moved is controlled through an operation input based on the motion of the core unit 70, the facing direction of the player character P can be quickly changed as necessary, that is, an input can be intuitively performed, thereby eliminating the reverse mode.

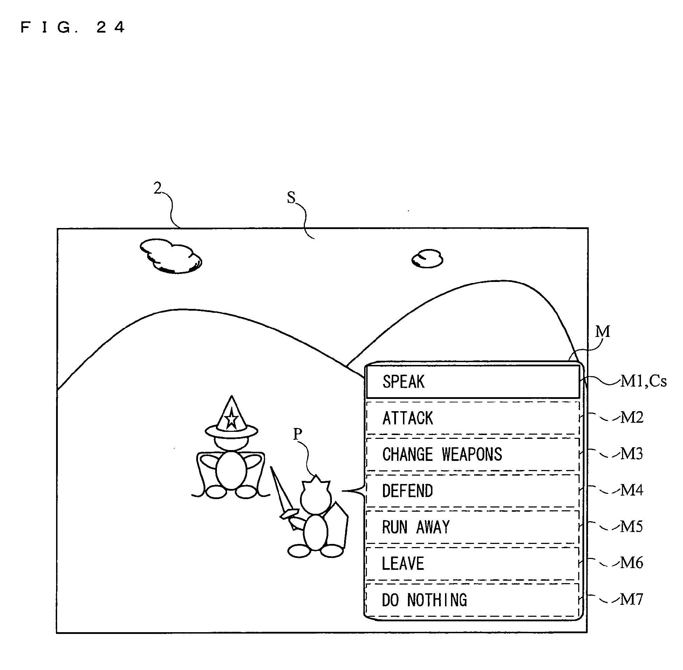

Next, with reference to FIG. 24, a third example in which a game is played using the aforementioned controller 7 will be described. As the third example, a role playing game played using the controller 7 will be described. FIG. 24 is a diagram illustrating an exemplary game image displayed on the monitor 2 when the game apparatus 3 executes the role playing game as the third example.

As shown in FIG. 24, a portion of the three-dimensional virtual game space S is displayed on the display screen of the monitor 2. The player character P and a menu M are displayed on the display screen as game objects acting in accordance with an operation of the controller 7. The menu M includes a plurality of choices M1 to M7 each indicating an action to be performed by the player character P in the virtual game space S, and the menu M is a menu screen for allowing the player to select from the plurality of choices M1 to M7.

In the role playing game having such a game image displayed on the monitor 2, as in the first example, aplayeroperates the core unit 70 with one hand and operates the subunit 76 with the other hand, so as to play the game. The operation object of the stick 78a on the subunit 76 is fixedly set as the player character P. The operation object of the imaging information calculation section 74 in the core unit 70 is set as one of the choices M1 to M7 displayed at a currently designated position. When the operation objects are set as described above, the player inclines the stick 78a on the subunit 76 so as to move the player character P in the virtual game space S in accordance with the inclining direction. Further, the player moves his or her hand holding the core unit 70 with respect to the display screen so as to set the designated position on the monitor 2, thereby displaying a selection cursor Cs corresponding to one of the choices M1 to M7 (for example, choice M1 in FIG. 24) displayed at the designated position. When the player presses the operation button 72i on the core unit 70, the currently selected choice (that is, a choice having the selection cursor Cs displayed) among the choices M1 to M7 is determined as an action to be performed by the player character P.

In the aforementioned operations, while the player is operating the stick 78a on the subunit 76 so as to instruct the player character P to move, the player can designate and select one of choices M1 to M7 from the menu using the core unit 70. The conventional game operation takes some amount of time for performing menu selection using the controller and also requires an input using a direction key and the like. Therefore, when the game is played in real time, the player cannot control the player character while selecting a choice from the menu, thereby failing to control the player character. However, in the third example, the player can control a character with one hand and directly select a choice with the other hand, thereby providing the player with an operation having time loss reduced and having controllability improved.

The aforementioned first to third examples are only examples of games which can enhance, by realizing the present invention, an effect thereof, and it should be understood that the present invention is not restricted to these games. For example, the player character or other game obj ects may be moved to positions in the game space corresponding to the designated positions by the core unit 70.

In the above description, the controller 7 and the game apparatus 3 are connected to each other by wireless communication. However, the controller 7 and the game apparatus 3 may be electrically connected to each other by a cable. In this case, the cable connected to the core unit 70 is connected to a connection terminal of the game apparatus 3.

Moreover, in the present embodiment, only the core unit 70 among the core unit 70 and the subunit 76 of the controller 7 has the communication section 75. However, the subunit 76 may have the communication section for wirelessly transmitting the transmission data to the receiving unit 6. Further, both the core unit 70 and the subunit 76 may have the respective communication sections. For example, the respective communication sections included in the core unit 70 and the subunit 76 may wirelessly transmit the transmission data to the receiving unit 6, or the communication section of the subunit 76 may wirelessly transmit the transmission data to the communication section 75 of the core unit 70, and the communication section 75 of the core unit 70 may wirelessly transmit, to the receiving unit 6, the received transmission data from the subunit 76 and the transmission data of the core unit 70. In these cases, the connecting cable 79 for electrically connecting between the core unit 70 and the subunit 76 can be eliminated, and the two units are completely separated from each other, thereby enabling two persons to play the game.

In the above description, the receiving unit 6 connected to the connection terminal of the game apparatus 3 is used as a receiving means for receiving transmission data which is wirelessly transmitted from the controller 7. Alternatively, the receiving means may be a receiving module built into the game apparatus 3. In this case, the transmission data received by the receivingmodule is outputted to the CPU 30 via a predetermined bus.

Although in the present embodiment the imaging information calculation section 74 included in the core unit 70 is described as an example of a determining section for outputting a signal (process result data) in accordance with a motion of the core unit 70 body, the imaging information calculation section 74 may be provided in another form. For example, the core unit 70 may include the acceleration sensor 701 as described above, or may include a gyro sensor. The acceleration sensor or the gyro sensor can be used to determine a motion or posture of the core unit 70, and, therefore, can be used as a determining section for outputting a signal in accordance with the motion of the core unit 70 body using the detection signal for the motion or posture. In this case, the imaging information calculation section 74 may be eliminated from the core unit 70, or sensor and the imaging information calculation section can be used in combination.

Although in the present embodiment only the core unit 70 includes the imaging information calculation section 74, the subunit 76 may also include the similar imaging information calculation section so as to allow a player to intuitively perform operation in accordance with the motion of the controller using both units. In this case, input operation can be performed with increased flexibility. Although in the present embodiment the core unit 70 and the subunit 76 form a controller, the subunit 76 can be replayed with another device having the same function as the core unit 70 or, for example, the subunit 76 may be replaced with the core unit 70. In this case, two core units 70 are used, and when the core unit 70 is regarded as a controller, two controllers are used. Since the core unit 70 includes a communication section for communicating with the game apparatus, the respective core units 70 communicate with the game apparatus, and the game apparatus performs a game process based on both operation data received from one core unit 70 and operation data received from the other core unit 70.

In the present embodiment, image data taken by the image pickup element 743 is analyzed so as to obtain position coordinates of infrared lights from the LED modules 8L and 8R, coordinates of the center of gravity thereof, and the like, and the core unit 70 generates process result data from the obtained coordinates and the like and transmits the process result data to the game apparatus 3. However, the core unit 70 may transmit data obtained in another process step to the game apparatus 3. For example, the core unit 70 transmits to the game apparatus 3 image data taken by the image pickup element 743, and the CPU 30 may perform the aforementioned analysis so as to obtain process result data. In this case, the image processing circuit 744 can be eliminated from the core unit 70. Alternatively, the core unit 70 may transmit, to the game apparatus 3, the image data having been analyzed halfway. For example, the core unit 70 transmits to the game apparatus 3 data indicating a brightness, a position, an area size and the like obtained from the image data, and the CPU 30 may perform the remaining analysis so as to obtain process result data.

Although in the present embodiment infrared lights from the two LED modules 8L and 8R are used as imaging targets of the imaging information calculation section 74 in the core unit 70, the imaging target is not restricted thereto. For example, infrared light from one LED module or infrared lights from at least three LED modules provided in the vicinity of the monitor 2 may be used as the imaging target of the imaging information calculation section 74. Alternatively, the display screen of the monitor 2 or another emitter (room light or the like) can be used as the imaging target of the imaging information calculation section 74. When the position of the core unit 70 with respect to the display screen is calculated based on the positional relationship between the imaging target and the display screen of the monitor 2, various emitters can be used as the imaging target of the imaging information calculation section 74.

The aforementioned shapes of the core unit 70 and the subunit 76 are merely examples. Further, the shape, the number, setting position and the like of each of the operation section 72 of the core unit 70 and the operation section 78 of the subunit 76 are merely examples. Needless to say, even when the shape, the number, the setting position and the like of each of the core unit 70, the subunit 76, the operation section 72, and the operation section 78 are different from those described in the embodiment, the present invention can be realized. Further, the imaging information calculation section 74 (light entrance of the imaging information calculation section 74) of the core unit 70 may not be positioned on the front surface of the housing 71. The imaging information calculation section 74 may be provided on another surface at which light can be received from the exterior of the housing 71.

Thus, the controller of the present invention allows a player to operate both the core unit 70 and the subunit 76 included therein so as to enjoy a game. The core unit 70 has a function of outputting a signal in accordance with motion of the unit body including the imaging information calculation section 74 and the accelerator sensor 701. The subunit 7 6 has a function of outputting a signal in accordance with a direction input operation performed by the player. For example, when used is a controller into which the core unit 70 and the subunit 76 are integrated, the whole controller has to be moved so as to output a signal in accordance with the motion of the unit body, thereby exerting some influence on the direction input operation. Further, the integration of the core unit 70 and the subunit 76 causes the opposite influence, that is, flexibility, which is realized by separation between the core unit 70 and the subunit 76, is substantially reduced. Therefore, the core unit 70 and the subunit 76 can be separated into a right unit and a left unit as in the case of a conventional controller for the game apparatus, and simultaneously the core unit 70 and the subunit 76 allow the player to freely use his or her right and left hands, thereby providing the player with new operation, which cannot be anticipated by the integrated controller. Further, the controller can be operated with substantially enhanced flexibility, thereby providing a player with a game operation having increased reality.

The game system and the storage medium having the game program stored thereon according to the present invention can realize operation having enhanced flexibility, and are useful as a game system which can be operated by a player by holding physically separated units, a game program and the like.

While the invention has been described in detail, the foregoing description is in all aspects illustrative and not restrictive. It is understood that numerous other modifications and variations can be devised without departing from the scope of the invention.

## Claims

1. A game system (1) comprising:
a first controller (70);
a second controller (76); and
a game apparatus (3) for executing a predetermined game program to cause a display device (2) to display, on a display area, one of a two-dimensional virtual game world and a three-dimensional virtual game world, wherein
the first controller includes a first operation data generation section (74, 701) for generating first operation data (Da1, Da2, Da5) in accordance with a motion of a first controller body included in the first controller;
the second controller includes a second operation data generation section (78) for generating second operation data (Da3) in accordance with a direction input operation performed by a player; and
the game apparatus includes
a game process means (30, S52~S56) for obtaining the first operation data and the second operation data and subjecting the virtual game world to a predetermined game process in accordance with the obtained operation data, and
a display process means (30, S57) for causing the display device to display, on the display area, an image of the virtual game world having been subjected to the game process.

2. The game system according to claim 1, wherein
the game process means includes a designated coordinate determination means (30, S53) for determining, based on the first operation data, predetermined coordinates represented in the display area of the display device as designated coordinates (Dc3); and
the game process means performs the game process by performing a predetermined calculation using the designated coordinates and the second operation data.

3. The game system according to claim 2, wherein
the first controller includes an image pickup section (74), fixed to the first controller body, and operable to take an image of a periphery along a predetermined direction from the first controller body,
the first operation data includes one selected from the group consisting of an image taken by the image pickup section and a result of subjecting the image taken by the image pickup section to a predetermined calculation, and
the designated coordinate determination means changes a position of designated coordinates from a predetermined position in accordance with a movement of a position of a predetermined imaging target (8) in the taken image, thereby determining the designated coordinates.

4. The game system according to claim 2, wherein
the first controller includes an acceleration sensor (701),
the first operation data includes acceleration data outputted by the acceleration sensor, and
the designated coordinate determination means changes a position of designated coordinates from a predetermined position in accordance with the acceleration data, thereby determining the designated coordinates.

5. The game system according to claim 2, wherein
the game process means calculates, in a three-dimensional virtual game space, three-dimensional designated coordinates corresponding to the designated coordinates and performs the game process including a calculation using the three-dimensional designated coordinates, and
the display process means displays, on the display area of the display device, the three-dimensional virtual game space obtained by the game process performed by the game process means.

6. The game system according to claim 5, wherein
the game process means changes at least one selected from the group consisting of position coordinates of a player character (P) in the virtual game world, position coordinates of a virtual camera (C), and a direction vector of the virtual camera, in accordance with the second operation data.

7. The game system according to claim 5, wherein
the game process means subjects an object (E) positioned at the three-dimensional designated coordinates to a predetermined process.

8. The game system according to claim 2, wherein
the game process means disposes a predetermined object (T) at a position corresponding to the designated coordinates.

9. The game system according to claim 7, wherein
the game process means changes at least one selected from the group consisting of position coordinates of a player character in the virtual game world, position coordinates of a virtual camera, and a direction vector of the virtual camera, in accordance with the second operation data.

10. The game system according to claim 2, wherein
the game process means generates the virtual game world including at least a menu area for allowing a player to select from a plurality of selection items (M1~M7), and
the game process means performs a process for selecting the selection item displayed at a position (Cs) including the designated coordinates in the display area.

11. The game system according to claim 10, wherein
the game process means changes at least one selected from the group consisting of position coordinates of a player character in the virtual game world, position coordinates of a virtual camera, and a direction vector of the virtual camera, in accordance with the second operation data.

12. The game system according to claim 5, wherein
the game process means changes a direction of a virtual camera such that a sight point of the virtual camera coincides with the three-dimensional designated coordinates.

13. The game system according to claim 12, wherein
the game process means changes at least one selected from the group consisting of position coordinates of a player character in the virtual game world and position coordinates of the virtual camera, in accordance with the second operation data.

14. The game system according to claim 1, wherein
the game process means subjects, to a predetermined calculation, an amount by which the first operation data varies in accordance with the motion of the first controller, determines a predetermined motion vector in a coordinate system of the display area, and changes a direction of a virtual camera such that a sight point of the virtual camera in a three-dimensional virtual game space moves on the display area in accordance with the motion vector, and
the display process means displays, on the display area of the display device, the three-dimensional virtual game space obtained by the game process performed by the game process means.

15. The game system according to claim 14, wherein
the game process means changes at least one selected from the group consisting of position coordinates of a player character in the virtual game world and position coordinates of the virtual camera, in accordance with the second operation data.

16. A storage medium having stored thereon a game program executable by a computer (30) of a game apparatus for obtaining first operation data in accordance with a motion of a first controller body included in the first controller and second operation data based on a direction input operation supplied to a second controller, wherein
the game program causes the computer to execute:
a game process step of obtaining the first operation data and the second operation data and subjecting one of a two-dimensional virtual game world and a three-dimensional virtual game world to a predetermined game process in accordance with the obtained operation data, and
a display process step of causing a display device to display, on a display area, an image of the virtual game world having been subjected to the game process.

17. The storage medium having the game program stored thereon according to claim 16, wherein
the game process step includes
a designated coordinate determination step of determining, based on the first operation data, predetermined coordinates represented in the display area of the display device as designated coordinates; and
a step of performing the game process by performing a predetermined calculation using the designated coordinates and the second operation data.

18. The storage medium having the game program stored thereon according to claim 17, wherein
the first operation data includes one selected from the group consisting of an image and a result of subjecting the image to a predetermined calculation, and
the designated coordinate determination step includes
a step of determining a movement of a position of a predetermined subject in the image, and
a step of determining new designated coordinates by changing a position of the designated coordinates from a predetermined position in accordance with the determined movement.

19. The storage medium having the game program stored thereon according to claim 17, wherein
the first operation data includes acceleration data outputted by an acceleration sensor of the first controller, and
the designated coordinate determination step includes a step of determining new designated coordinates by changing a position of the designated coordinates from a predetermined position in accordance with the acceleration data.

20. The storage medium having the game program stored thereon according to claim 17, wherein
the game process step includes
a step of calculating, in a three-dimensional virtual game space, three-dimensional designated coordinates corresponding to the designated coordinates, and
a step of performing the game process including a calculation using the three-dimensional designated coordinates, and
the display process step includes a step of displaying, on the display area of the display device, the three-dimensional virtual game space obtained by the game process performed by the game process step.

21. The storage medium having the game program stored thereon according to claim 20, wherein
the game process step includes a step of changing at least one selected from the group consisting of position coordinates of a player character in the virtual game world, position coordinates of a virtual camera, and a direction vector of the virtual camera, in accordance with the second operation data.

22. The storage medium having the game program stored thereon according to claim 20, wherein
the game process step includes
a step of determining an object positioned at the three-dimensional designated coordinates, and
a step of subjecting the object to a predetermined process.

23. The storage medium having the game program stored thereon according to claim 17, wherein
the game process step includes a step of disposing a predetermined object at a position corresponding to the designated coordinates.

24. The storage medium having the game program stored thereon according to claim 23, wherein
the game process step includes a step of changing at least one selected from the group consisting of position coordinates of a player character in the virtual game world, position coordinates of a virtual camera, and a direction vector of the virtual camera, in accordance with the second operation data.

25. The storage medium having the game program stored thereon according to claim 17, wherein
the game process step includes
a step of generating the virtual game world including at least a menu area for allowing a player to select from a plurality of selection items, and
a step of performing a process for selecting the selection item displayed at a position including the designated coordinates in the display area.

26. The storage medium having the game program stored thereon according to claim 25, wherein
the game process step includes a step of changing at least one selected from the group consisting of position coordinates of a player character in the virtual game world, position coordinates of a virtual camera, and a direction vector of the virtual camera, in accordance with the second operation data.

27. The storage medium having the game program stored thereon according to claim 20, wherein
the game process step includes a step of changing a direction of a virtual camera such that a sight point of the virtual camera coincides with the three-dimensional designated coordinates.

28. The storage medium having the game program stored thereon according to claim 20, wherein
the game process step includes a step of changing at least one selected from the group consisting of position coordinates of a player character in the virtual game world and position coordinates of a virtual camera, in accordance with the second operation data.

29. The storage medium having the game program stored thereon according to claim 16, wherein
the game process step includes
a step of subjecting, to a predetermined calculation, an amount by which the first operation data varies in accordance with the motion of the first controller,
a step of determining a predetermined motion vector in a coordinate system of the display area, and
a step of changing a direction of a virtual camera such that a sight point of the virtual camera in a three-dimensional virtual game space moves on the display area in accordance with the motion vector, and
the display process step includes a step of displaying, on the display area of the display device, the three-dimensional virtual game space obtained by the game process performed by the game process step.

30. The storage medium having the game program stored thereon according to claim 29, wherein
the game process step includes a step of changing at least one selected from the group consisting of position coordinates of a player character in the virtual game world and position coordinates of the virtual camera, in accordance with the second operation data.
